(19) Europäisches Patentamt
European Patent Office
Office européen des brevets

(11) Veröffentlichungsnummer: **0 228 044**
**B1**

(12) # EUROPÄISCHE PATENTSCHRIFT

(45) Veröffentlichungstag der Patentschrift: **17.01.90**

(51) Int. Cl.⁴: **C09B 62/09,** D06P 1/382, C09B 62/513

(21) Anmeldenummer: **86117723.6**

(22) Anmeldetag: **19.12.86**

(54) **Wasserlösliche Azoverbindungen, Verfahren zu ihrer Herstellung und ihre Verwendung als Farbstoffe.**

(30) Priorität: **28.12.85 DE 3546262**
**17.02.86 DE 3604858**

(43) Veröffentlichungstag der Anmeldung: **08.07.87 Patentblatt 87/28**

(45) Bekanntmachung des Hinweises auf die Patenterteilung: **17.01.90 Patentblatt 90/3**

(84) Benannte Vertragsstaaten: **BE CH DE FR GB IT LI**

(56) Entgegenhaltungen:
**GB-A-2 008 144**
**GB-A-2 008 145**

(73) Patentinhaber: **HOECHST AKTIENGESELLSCHAFT, Postfach 80 03 20, D-6230 Frankfurt am Main 80(DE)**

(72) Erfinder: **Schläfer, Ludwig, Dr., Königsberger Strasse 40, D-6233 Kelkheim (Taunus)(DE)**
Erfinder: **Springer, Hartmut, Dr., Am Erdbeerstein 27, D-6240 Königstein Taunus(DE)**
Erfinder: **Kunze, Michael, Dr., Platanenweg 1a, D-6238 Hofheim anm Taunus(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die vorliegende Erfindung liegt auf dem technischen Gebiet der Textilfarbstoffe.

Cellulosefasern und Polyesterfasern können derzeit gemeinsam wegen ihrer unterschiedlichen chemischen Natur nicht mit ein und demselben Farbstoff einheitlich und gleichmäßig gefärbt werden. Man ist gezwungen, gemischte Materialien aus diesen beiden Faserarten, wie beispielsweise Mischgewebe, in einer zweistufigen Verfahrensweise zu färben, nämlich zunächst die eine Faserart mit dem für diese geeigneten Farbstoff, sodann die andere Faserart mit dem für diese zweite Faserart geeigneten Farbstoff, jeweils unter Anwendung unterschiedlicher Verfahrensbedingungen. Solch eine Verfahrensweise ist notwendigerweise langwierig und ersatzbedürftig. Eine andere Verfahrensweise zur Färbung von solchen Mischfasermaterialien beruht auf der Verwendung von Farbstoffgemischen, so einem Gemisch aus einem faserreaktiven Farbstoff zur Anfärbung des Cellulosefaseranteils und einem Dispersionsfarbstoff zur Anfärbung des Polyesterfaseranteils. Da faserreaktive Farbstoffe üblicherweise im alkalischen Medium auf der Cellulosefaser fixieren und Dispersionsfarbstoffe üblicherweise, wie in gewissem Umfange auch die Polyesterfaser, gegen Alkali empfindlich sind, hat diese Verfahrensweise den Nachteil, daß bei der Fixierung der faserreaktiven Farbstoffe im alkalischen Millieu die gleichzeitig vorhandenen Dispersionsfarbstoffe und ebenso die Polyesterfaser geschädigt werden können.

Es bestand somit die Aufgabe, diese bisher bekannten Nachteile zu reduzieren oder gar zu beheben, zumal das Färben von Mischgeweben, wie beispielsweise solche aus Cellulose- und Polyesterfasern, zunehmend an Bedeutung gewinnt. Somit besteht auch verstärkt ein Interesse an Farbstoffen, die das Färben von solchen Mischgeweben problemloser machen, so insbesondere an faserreaktiven Farbstoffen, die im nicht-alkalischen Bereich auf der Cellulosefaser zu fixieren vermögen und zudem bei möglichst niedrigen Färbetemperaturen angewendet werden können.

So werden in der US-Patentschrift Nr. 3 647 778 Disazofarbstoffe beschrieben, die zwei über ein Brückenglied miteinander verbundene Chlor-s-triazinylamino-Reste enthalten, an denen endständig, wiederum über eine Aminogruppe gebunden, ein sulfogruppenhaltiger Naphthylazonaphthalin- oder Phenylazonaphthalin-Chromophor gebunden ist. Mit diesen faserreaktiven Farbstoffen können Cellulosefasermaterialien gefärbt werden, wobei deren Anwendung und Fixierung nach den für faserreaktive Farbstoffe üblichen Färbeweisen unter Verwendung säurebindender, d.h. alkalisch wirkender Mittel geschieht. Jedoch erfolgt keine echte Fixierung dieser bekannten Farbstoffe auf der Cellulosefaser im schwach sauren bis neutralen Färbebereich.

Disazofarbstoffe ähnlicher Konstitution sind aus der US-PS 4 323 497 bekannt; sie enthalten in der Diazokomponente des Azochromophors zusätzlich eine faserreaktive Gruppe der Vinylsulfonreihe. Auch diese Farbstoffe eignen sich nicht zum echten Färben von Cellulosefasermaterialien im schwach sauren bis alkalischen Bereich.

Mit der vorliegenden Erfindung wurden nunmehr neue wasserlösliche Verbindungen gefunden, die der nachstehend genannten und definierten allgemeinen Formel (1) entsprechen, faserreaktive Eigenschaften besitzen und sich nicht nur mit Vorteil im alkalischen Bereich zum Färben von Cellulosefasern anwenden lassen, sondern die überraschenderweise auf Cellulosefasern bereits im schwach sauren und neutralen Bereich, nämlich unter den Bedingungen des sogenannten Hochtemperatur-Neutral-Färbeverfahrens (HTN-Verfahren) bei Temperaturen zwischen 100 und 150°C und einem pH-Wert zwischen 4 und 8 in wäßrigem Medium, somit unter Bedingungen des Färbens von Polyesterfasern, zu fixieren vermögen. Durch die Auffindung der neuen Farbstoffe der allgemeinen Formel (1) eröffnet sich die Möglichkeit, die bisher üblichen und gebräuchlichen Dispersionsfarbstoffe zusammen mit diesen neuen Farbstoffen in einstufige Färbeverfahren zur Färbung von Cellulose/Polyester-Fasergemischen einzusetzen, in welchen beide Faserkomponenten gleichmäßig und ech durch die jeweilige Farbstoffart angefärbt werden und Ton-in-Ton-Färbungen erhalten werden können, wenn der angewendete Dispersionsfarbstoff die gleiche Nuance wie der faserreaktive Farbstoff besitzt.

Die neuen faserreaktiven Verbindungen besitzen die allgemeine Formel (1)

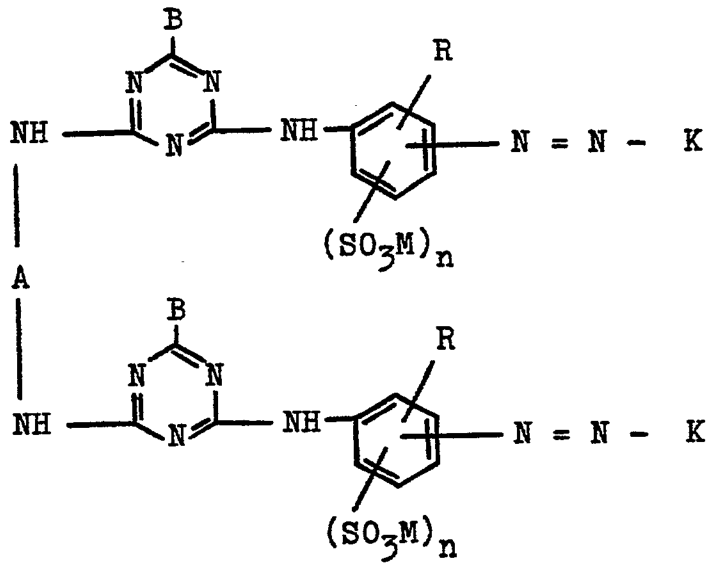

(1)

in welcher die verschiedenen Formelglieder die folgenden Bedeutungen besitzen:
A ist eine geradkettige oder verzweigte bevorzugt geradkettige Alkylengruppe von 2 bis 6 C-Atomen oder ein Phenylenrest, der durch 1 oder 2 Substituenten aus der Gruppe Alkoxy von 1 bis 4 C-Atomen, wie Methoxy und Ethoxy, Alkyl von 1 bis 4 C-Atomen, wie Methyl und Ethyl, Chlor, Sulfo und Carboxy, wobei insbesondere die Sulfogruppen bevorzugte Substituenten sind, oder
A ist ein Rest der allgemeinen Formel (2)

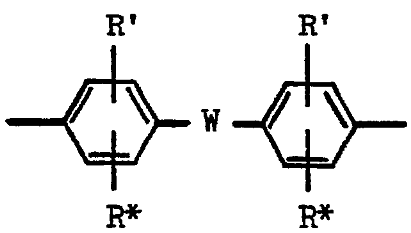

(2)

in welcher
W eine direkte Bindung oder eine Gruppe der Formel $-CH_2-$, $-CH_2-CH_2-$ , $-O-CH_2-CH_2-O-$ , -CH=CH- , -N=N- , -NH-CO-NH- oder -CO-NH- ist, wobei die Gruppen -CH=CH- und -NH-CO-NH- bevorzugt sind und W ebenso bevorzugt eine direkte Bindung bedeutet, und
die R′ und R*, zueinander gleich oder voneinander verschieden, die R* bevorzugt zueinander gleich, jedes ein Wasserstoffatom, ein Chloratom, eine Methyl-, Methoxy-, Ethoxy-, Carboxy- oder Sulfogruppe bedeuten, wobei die R′ bevorzugt ein Wasserstoffatom sind;
B ist ein Chlor- oder ein Fluoratom, bevorzugt ein Chloratom;
R ist ein Wasserstoff oder ein Chloratom, eine Alkylgruppe von 1 bis 4 C-Atomen, wie die Methylgruppe oder eine Alkoxygruppe von 1 bis 4 C-Atomen, wie die Methoxy- oder Ethoxygruppe, bevorzugt ein Wasserstoffatom;
M ist ein Wasserstoffatom oder ein Alkalimetall, wie Natrium, Kalium oder Lithium;
n steht für die Zahl Null, 1 oder 2 (wobei im Falle n = 0 diese Gruppe ein Wasserstoffatom bedeutet), und ist bevorzugt Null oder 1 im Falle, daß R eine andere der genannten Gruppen als Wasserstoff ist;
K ist ein Rest der allgemeinen Formel (3), (4), (5) oder (6)

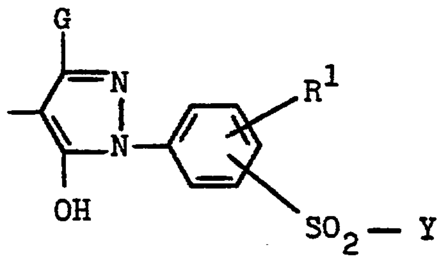 (3)

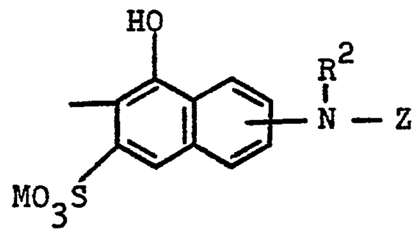 (4)

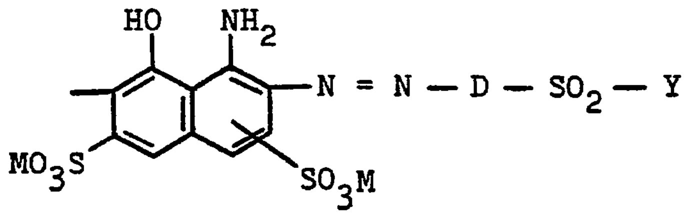 (5)

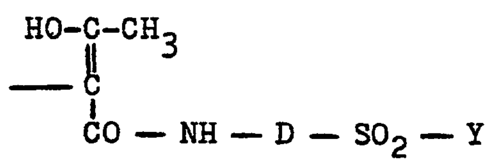 (6)

in welchen bedeuten:

D ist ein Phenylenrest, der durch 1 oder 2 Substituenten aus der Gruppe Chlor, Brom, Alkyl von 1 bis 4 C-Atomen, wie Methyl, Alkoxy von 1 bis 4 C-Atomen, wie Methoxy und Ethoxy, Carboxy und Sulfo substituiert sein kann, oder ist ein Naphthylenrest, wie insbesondere ein in 2-Stellung mit der Azogruppe verbundener Naphthylenrest, der durch 1 oder 2 Sulfogruppen substituiert sein kann;

$R^1$ ist ein Wasserstoffatom, ein Chloratom, eine Alkylgruppe von 1 bis 4 C-Atomen, wie die Methylgruppe, oder eine Alkoxygruppe von 1 bis 4 C-Atomen, wie die Methoxygruppe, bevorzugt jedoch ein Wasserstoffatom;

$R^2$ ist ein Wasserstoffatom oder eine Alkylgruppe von 1 bis 4 C-Atomen, wie die Methylgruppe;

G ist eine Carboxy-, Methyl- oder Carbalkoxygruppe von 2 bis 5 C-Atomen, wie die Carbomethoxy- oder Carbethoxygruppe, bevorzugt die Methyl- oder Carboxygruppe;

Y ist eine Vinyl-, β-Sulfatoethyl-, β-Phosphatoethyl-, β-Thiosulfatoethyl- oder β-Chlorethyl-Gruppe, bevorzugt die Vinyl und insbesondere die β-Sulfatoethyl-Gruppe;

M hat die obengenannte Bedeutung;

Z ist der α-oder β-Brom-acryloyl-Rest, bevorzugt jedoch der β-Chlor-propionyl-Rest oder ein Rest der allgemeinen Formel (3a)

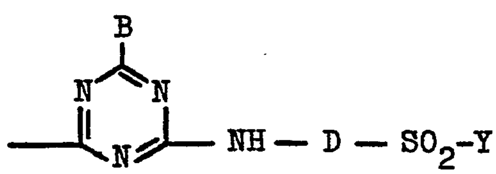 (3a)

in welcher B, D und Y die obengenannten, insbesondere bevorzugten Bedeutungen haben.

Die einzelnen Formelglieder können zueinander gleiche oder voneinander verschiedene Bedeutungen haben. Insbesondere können die jeweils zweifach auftretenden Formelglieder eine zueinander gleiche oder eine voneinander verschiedene Bedeutung haben; bevorzugt haben die Formelrestpaare B, R, M und K jeweils eine zueinander gleiche Bedeutung.

In den allgemeinen Formeln (3a), (5) und (6) ist D bevorzugt ein unsubstituierter oder ein durch die hierfür genannten Substituenten substituierter Phenylenrest. Die faserreaktive Gruppe der Formel $-SO_2-Y$ ist in den allgemeinen Formeln (3), (3a), (5) und (6) an den Benzolkern bevorzugt in meta- oder para-Stellung zum Stickstoffatom des Pyrazolons bzw. der Amino-, Azo- oder Amidgruppe gebunden.

Im vorstehenden sowie im nachstehenden bedeuten Sulfogruppen Gruppen entsprechend der allgemeinen Formel $-SO_3M$ mit M der obengenannten Bedeutung, des weiteren Carboxygruppen Gruppen der allgemeinen Formel -COOM , Phosphatogruppen Gruppen der allgemeinen Formel $-OPO_3M_2$ , Thiosulfatogruppen Gruppen der allgemeinen Formel $-S-SO_3M$ und Sulfatogruppen Gruppen der allgemeinen Formel $-OSO_3M$ , jeweils mit M der obengenannten Bedeutung.

Die erfindungsgemäßen Azoverbindungen können in Form ihrer freien Säure und bevorzugt in Form ihrer Alkalisalze, insbesondere der neutralen Salze, vorliegen. Sie finden bevorzugt in Form dieser Salze ihre Verwendung zum Färben und Bedrucken von hydroxy- und/oder carbonamidgruppenhaltigen Fasermaterialien. .

Die vorliegende Erfindung betrifft weiterhin Verfahren zur Herstellung der Azoverbindungen der allgemeinen Formel (1). Diese sind dadurch gekennzeichnet, daß man

a) eine aromatische Aminoverbindung der allgemeinen Formel (7)

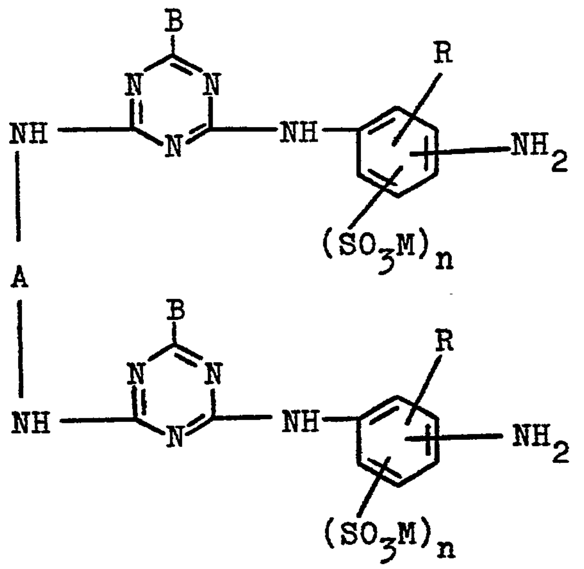

(7)

in welcher A, B, R, M und n die obengenannten Bedeutungen haben, in an und für sich bekannter Verfahrensweise zweifach diazotiert (tetrazotiert) und in an und für sich bekannter Verfahrensweise mit einer Kupplungskomponente der allgemeinen Formel (8)

H–K (8)

in welcher K die obengenannte Bedeutung besitzt, oder mit zwei verschiedenen Kupplungskomponenten der allgemeinen Formel (8) in äquivalenter Menge kuppelt, oder

b) daß man eine aromatische Dihalogentriazin-Azoverbindung der allgemeinen Formel (9)

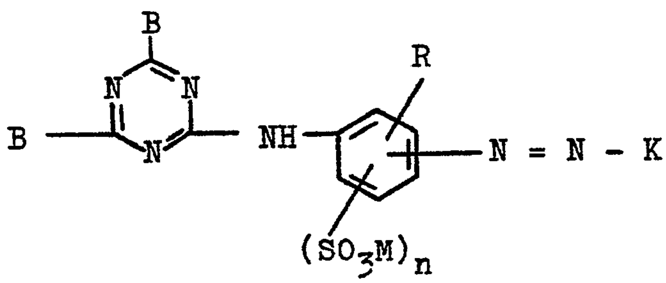

(9)

in welcher B, R, K, M und n die obengenannten Bedeutungen haben und beide Formelglieder B eine zueinander gleiche Bedeutung besitzen, oder zwei verschiedene Verbindungen der allgemeinen Formel (9) in äquivalenter Menge mit einer Diaminoverbindung der allgemeinen Formel (10)

$H_2N-A-NH_2$(10)

in an und für sich bekannter Verfahrensweise der Umsetzung von Aminoverbindungen mit Dihalogentriazin-Verbindungen umsetzt.

Die Ausgangsverbindungen der allgemeinen Formel (9) lassen sich in bekannter Verfahrensweise durch Umsetzung einer Amino-Azoverbindung der allgemeinen Formel (11)

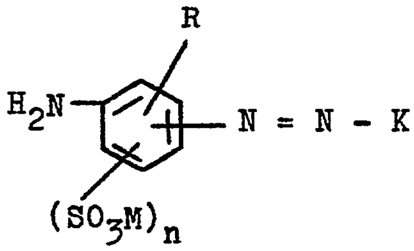

(11)

in welcher R, K, M und n die obengenannten Bedeutungen haben, mit Cyanurchlorid oder Cyanurfluorid herstellen oder durch Diazotierung einer Dihalogenotriazinverbindung der allgemeinen Formel (12)

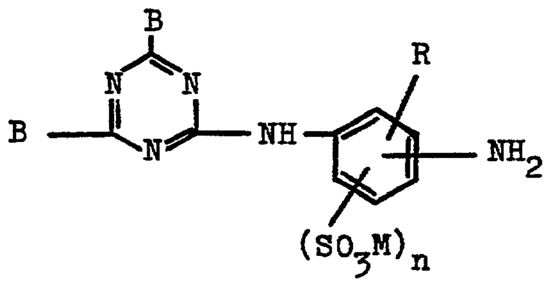

(12)

in welcher B, R, M und n die obengenannten Bedeutungen haben, und Kupplung mit einer Verbindung der allgemeinen Formel (8).

Die Diazotierung der Verbindungen der allgemeinen Formel (7) oder (12) erfolgt in an und für sich üblicher Verfahrensweise, so beispielsweise durch Umsetzung mit salpetriger Säure in einem wäßrig-sauren Medium, so bei einer Temperatur zwischen -5°C und +10°C und bei einem pH-Wert zwischen 0 und 2. Die Kupplungsreaktionen können ebenfalls in wäßrigem Medium durchgeführt werden, so beispielsweise bei einer Temperatur zwischen -5°C und +30°C und bei einem pH-Wert zwischen 3 und 8, bevorzugt 3 und 7.

Die Kondensationsreaktion zwischen der Dihalogeno-triazinyl-Azoverbindung der allgemeinen Formel (9) und der Diaminoverbindung der allgemeinen Formel (10) erfolgt in üblicher Verfahrensweise, wie sie für diesen Reaktionstyp in der Literatur beschrieben ist, so beispielsweise im wäßrigen oder wäßrigorganischen Medium (wobei die organische Komponente bevorzugt Aceton, Toluol und Ethylenchlorid ist), bei einem pH-Wert zwischen 2 und 6 und bei einer Temperatur zwischen 20 und 60°C. Die Ausgangsverbindungen, die zur Herstellung der erfindungsgemäßen Verbindungen dienen, zing zahlreich in der Literatur beschrieben oder können analog solchen in der Literatur beschriebenen Verbindungen mit den entsprechenden analogen Vorstufen hergestellt werden. So können beispielsweise die Ausgangs-Aminoverbindungen der allgemeinen Formeln (7) und (12) gemäß den in der deutschen Patenschrift Nr. 485 185 beschriebenen Verfahrensweisen leicht aufgebaut werden.

Die Abscheidung und Isolierung der erfindungsgemäß hergestellten Verbindungen der allgemeinen Formel (1) aus den Syntheselösungen erfolgt nach allgemein bekannten Methoden, so beispielsweise durch Ausfällen aus dem Reaktionsmedium mittels Elektrolyten oder durch Eindampfen der Reaktionslösung, wie beispielsweise durch Sprühtrocknung, wobei der Syntheselösung zuvor jeweils Puffersubstanzen zugefügt werden können.

Die erfindungsgemäßen Verbindungen haben Farbstoffeigenschaften. Infolge der faserreaktiven Gruppen, die sie besitzen, können sie auch als faserreaktive Farbstoffe Verwendung finden. Sie können nach an und für sich üblichen und bekannten Verfahrensweisen der Applikation und Fixierung von faserreaktiven Farbstoffen auf hydroxygruppenhaltigen und/oder carbonamidgruppenhaltigen Materialien, insbesondere Fasermaterialien, zum Färben (einschließlich Bedrucken) eingesetzt werden, so beispielsweise von Wolle, synthetischen Polyamidfasern, insbesondere jedoch von Cellulosefasermaterialien, wie Baumwolle. Solche Verfahrensweisen sind zahlreich in der Fachliteratur, wie auch Patentliteratur, so beispielsweise in der deutschen Offenlegungsschrift Nr. 3 440 265, beschrieben.

Die vorliegende Erfindung betrifft somit auch die Verwendung der erfindungsgemäßen Verbindungen zum Färben (einschließlich Bedrucken von hydroxygruppenhaltigem und/oder carbonamidgruppenhaltigen Materialien, insbesondere Fasermaterialien, bzw. ein Verfahren zum Färben (einschließlich Bedrucken) von solchen Materialien, bei welchem man eine erfindungsgemäße Verbindung aus bevorzugt wäßriger Lösung auf das Material aufbringt und sie auf dem Material mittels Wärme und/oder mit Hilfe eines säurebindenden Mittels - beim Färben von hydroxygruppenhaltigen Materialen vorzugsweise bei einem pH-Wert zwischen 8 und 11 und bei einer Temperatur zwischen 15 und 120°C, vorzugsweise zwischen 20 und 80°C, - fixiert.

Die erfindungsgemäßen Verbindungen haben zudem den großen Vorteil, wie anfangs bereits erwähnt, daß sie hydroxygruppenhaltige Fasermaterialien, wie Cellulosefasermaterialien, aus wäßriger Flotte, wie bevorzugt im wäßrigen Färbebad nach einem Ausziehverfahren, bereits in einem schwach sauren pH-Bereich von 5 und größer als 5, wie bei einem pH-Wert zwischen 5 und 7, d.h. überraschenderweise in Abwesenheit von alkalisch wirkenden Substanzen, gegebenenfalls jedoch in Gegenwart eines üblichen säurebindenden Puffergemisches zur Einstellung und Einhaltung des pH-Bereiches und ggf. in Gegenwart üblicher Färbehilfsmittel, bei einer Temperatur zwischen 100 und 150°C, bevorzugt bei einer Temperatur von 120 bis 135°C, zu färben vermögen und auf diesen Materialien echt fixieren. Solche Puffer sind bspw. wäßrige Lösungen von Phosphorsäure/Natriumphosphat und Essigsäure/Natriumacetat.

Unter diesen Färbebedingungen der (Hochtemperatur-Neutral-Färbeweise, die an und für sich bekannt sind (s. deutsche Auslegeschrift Nr. 2 835 035) und die im wesentlichen den Färbebedingungen des Färbens von Polyesterfasern oder anderen synthetischen Fasern, wie Cellulosetriacetatfasern, mit Dispersionsfarbstoffen entsprechen, ist es möglich, Cellulose-Mischfasermaterial, wie Cellulose-Cellulosetriacetatfaser und Cellulose-Polyacrylnitrilfaser- und insbesondere Cellulose-Polyester-Mischfasermaterialien, mit einem üblichen Dispersionsfarbstoff gleichzeitig und zusammen mit einem faserreaktiven Farbstoff, nämlich einer erfindungsgemäßen Azoverbindung, aus einer gemeinsamen wäßrigen Färbeflotte ohne das ansonsten bestehende Risiko der Schädigung des Dispersionsfarbstoffes als auch der synthetischen Faser, wie Polyesterfaser, in einem einstufigen Verfahren mit Vorteil gleichmäßig und echt und gewünschtenfalls Ton-in-Ton zu färben.

Die vorliegende Erfindung betrifft somit auch ein Verfahren zum Färben von Mischfasermaterialien aus Cellulose und synthetischen Fasern, bevorzugt von Cellulose-Polyester-Fasergemischen, mit einem (oder mehreren) Dispersions-farbstoff(en) und einem oder mehreren erfindungsgemäßen Farbstoff(en) durch Einwirkung dieser Farbstoffe auf das Fasermaterial aus wäßriger Färbeflotte, bevorzugt aus wäßrigem Färbebad, bei einer Temperatur zwischen 100 und 150°C, bevorzugt bei einer Temperatur von 120 bis 135°C, und bei einem pH-Wert zwischen 4 und 8, erforderlichenfalls zwischen 5 bis 7,5, bevorzugt zwischen 5 und 7.

Mit dieser erfindungsgemäßen Färbeweise werden die synthetischen Fasern, wie Polyesterfasern, durch den Dispersionsfarbstoff und die Cellulosefasern durch die faserreaktive erfindungsgemäße Azoverbindung in der gewünschten guten Qualität gefärbt (hierbei erfolgt keine Anfärbung der synthetischen Faser, wie Cellulosetriacetat und Polyesterfaser, durch die erfindungsgemäßen Azoverbindungen). Die Qualität der Färbung der synthetischen Fasern ist durch den Dispersionsfarbstoff bedingt und entspricht dem Stand der Technik. Überraschenderweise besitzen die Cellulosefasermaterialien, die unter diesen Bedingungen der Färbeweise für Dispersionsfarbstoffe mit den erfindungsgemäßen Azoverbindungen gefärbt wurden, neben einer klaren Nuance beachtliche Echtheitseigenschaften (diese Echtheitseigenschaften sind in jedem Falle vorhanden, wenn die erfindungsgemäßen Azoverbindungen auf den Cellulosefasermaterialien nach den üblichen Verfahrensweisen der Applikation und Fixierung für faserreaktive Farbstoffe im alkalischen Bereich angewendet werden).

Von den guten Gebrauchs und Fabrikationsechtheiten sind insbesondere die guten Lichtechtheiten sowohl der trockenen als auch der feuchten, mit Trinkwasser oder einer alkalischen Schweißlösung imprägnierten Cellulosefärbung, weiterhin von den Naßechtheiten insbesondere die guten Wasch-, Wasser-, Seewasser-, Überfärbe- und Schweißechtheiten sowie die gute Säurelagerbeständigkeit und ebenfalls die guten Plissier-, Bügelecht-, Reib- und Sublimierechtheiten Färbungen auf Cellulosefasematerialien hervorzuheben, die mit den erfindungsgemäßen Azoverbindungen nicht nur bei Anwendung der Verfahrensweisen für faserreaktive Farbstoffe, sondern auch bei Anwendung der Färbeweisen für Dispersionsfarbstoffe erhältlich sind.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säuren geschrieben; im allgemeinen werden sie in Form ihrer Alkalimetallsalze hergestellt und isoliert und in Form dieser Salze zum Färben verwendet. Ebenso können die in den Beispielen, insbesondere Tabellenbeispielen, in Form der freien Säuren genannten Ausgangsverbindungen und Komponenten als solche oder in Form ihrer Salze, vorzugsweise Alkalimetallsalze, wie Natrium-oder Kaliumsalze, in die Synthese eingesetzt werden.

Die in den Beispielen für die erfindungsgemäßen Azoverbindungen im sichtbaren Bereich genannten Absorptionsmaxima ($\lambda_{max}$-Werte) wurden anhand deren Alkalisalze aus wäßriger Lösung ermittelt.

<u>Beispiel 1</u>

Eine aus 37 Teilen 4,4'-Diamino-stilben-2,2'-disulfonsäure, 17 Volumenteilen einer 32%igen wäßrigen Natronlauge und 700 Teilen Wasser hergestellte Lösung wird unter gutem Rühren innerhalb von 15 Minuten in ein Gemisch aus 400 Teilen Eis, 100 Teilen Wasser und 37 Teilen Cyanurchlorid gegeben; es wird etwa 1 Teil eines handelsüblichen Dispergiermittels hinzugesetzt, der pH der Reaktionsmischung mit Natriumbicarbonat auf einen Wert von 5,8 gestellt und das Reaktionsgemisch noch 1 Stunde bei 10°C unter

Einhaltung eines pH-Bereiches von 4,5 bis 5,5 nachgerührt. Anschließend gibt man eine Lösung aus 37,7 Teilen 1,3-Diaminobenzo-4-sulfonsäure, 27 Volumenteilen einer wäßrigen 32%igen Natronlauge und 300 Teilen Wasser hinzu, stellt den pH-Wert auf 4 bis 5, erwärmt auf 40°C und rührt die nun entstehende Lösung noch 3 Stunden bei 40 bis 50°C unter Einhaltung des pH-Wertes von 4 bis 5 mittels etwa 40 Teilen Natriumbicarbonat nach.

Anschließend wird der Ansatz mit 45 Volumenteilen einer wäßrigen 31%igen Salzsäure versetzt, auf 0 bis 5°C abgekühlt und unter Zugabe von 17,8 Volumenteilen einer 39%igen wäßrigen Natriumnitritlösung in üblicher Weise diazotiert. Die Kupplungsreaktion erfolgt durch Zugabe einer wäßrigen, neutralen Lösung von 47,5 Teilen 3-Methyl-1-(4 '-β-Sulfatoethylsulfonyl)-phenyl-5-pyrazolon unter Einstellung und Einhaltung eines pH-Wertes von 6,5 bis 7 mittels etwa 60 Teilen Natriumbicarbonat und 120 Teilen Natriumcarbonat. Nach Beendigung der Kupplungsreaktion verdünnt man die Syntheselösung mit Wasser auf 4500 Teile und gibt 450 Teile Kaliumchlorid hunzu, heizt das Gemisch auf 80°C, rührt bei dieser Temperatur etwa 30 Minuten nach und saugt die abgeschiedene erfindungsgemäße Verbindung bei 60 bis 70°C ab.

Man erhält ein gelbes, elektrolythaltiges Pulver mit dem Alkalisalz (insbesondere Kaliumsalz) der Verbindung der Formel

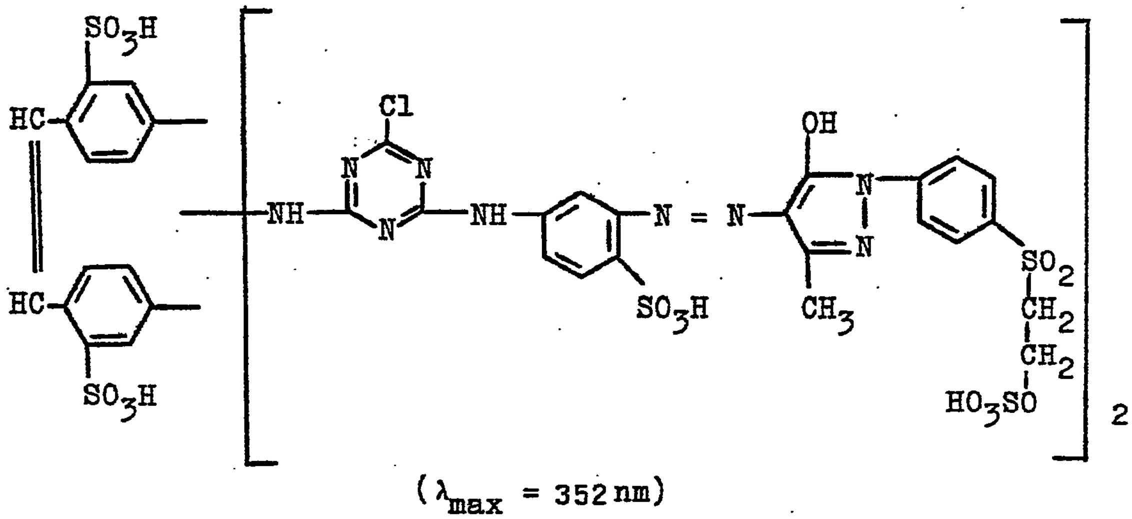

($\lambda_{max}$ = 352 nm)

Die erfindungsgemäße Disazoverbindung zeigt sehr gute faserreaktive Farbstoffeigenschaften; sie färbt Cellulosefasermaterialien bei den für faserreaktive Farbstoffen üblichen Applikations- und Fixierbedingungen unter Anwendung von alkalisch wirkenden Mitteln in kräftigen und echten grünstichig gelben Farbtönen mit hohen Farbausbeuten. Desweiteren liefert sie beim Färben von Baumwolle aus langer wäßriger Flotte unter den Färbebedingungen der Polyesterfaserfärbung, wie beispielsweise bei einer Temperatur zwischen 120 und 130°C innerhalb einer Färbezeit von 90 Minuten und bei einem pH-Wert zwischen 5 und 7 unter Zusatz von 5 % Natriumsulfat (bezogen auf das Gewicht des zu färbenden Materials) ebenso wertvolle grünstichig gelbe Färbungen, wobei die erreichte Farbstärke in dieser Verfahrensweise derjenigen entspricht, die unter den alkalischen Fixierbedingungen für faserreaktive Farbstoffe erreicht werden. Wie nach der üblichen Färbeweise für faserreaktive Bedingungen werden auch nach dieser Färbeweise mittels dieser erfindungsgemäßen Disazoverbindung Baumwollfärbungen mit guten Lichtechtheiten und mit guten Wasch-, Schweiß-, Wasser-, Bügel-, Abgas- und Sublimationsechtheiten und einer guten Säurelagerbeständigkeit erhalten.

Beispiel 2

74 Teile Cyanurchlorid werden in wäßriger Suspension unter Rühren mit einer neutralen Lösung von 75,3 Teilen 1,4-Diaminobenzol-3-sulfonsäure bei 0 bis 5°C versetzt; man läßt den pH-Wert auf kleiner als 1 abfallen und rührt den Ansatz noch 90 Minuten bei dem pH-Wert unterhalb 1 und bei einer Temperatur von 0 bis 5°C nach. Man gibt sodann langsam 21,6 Teile 1,4-Diaminobenzol in das Reaktionsgemisch, rührt 30 Minuten nach und stellt sodann innerhalb von 90 Minuten den pH-Wert auf 5,5, erwärmt langsam auf 40 bis 50°C und rührt den Reaktionsansatz bei dieser Temperatur noch drei Stunden unter Einhaltung eines pH-Wertes von 5 bis 5,5 nach. Gegen Ende der zweiten Kondensationsreaktion wird der pH-Wert auf 7 gestellt, wobei Lösung des Reaktionsproduktes eintritt.

Der Ansatz wird auf etwa 10°C abgekühlt, mit 52,5 Volumenteilen einer 39%igen wäßrigen Natriumnitritlösung vermischt und in üblicher Weise durch langsames Eingießen in ein Gemisch aus 150 Volumenteilen konzentrierter Salzsäure und 1000 Teilen Eis diazotiert. Man rührt noch etwa 30 Minuten nach und gibt 10 % Natriumchlorid, bezogen auf das Volumen der Diazoniumsalzsuspension, hinzu, rührt bei gelindem Nitritüberschuß noch drei Stunden nach und zerstört sodann überschüssiges Nitrit mittels Amidosulfonsäure. Die Kupplungsreaktion erfolgt durch Zugabe einer neutralen wäßrigen Lösung von 127,6 Teilen 3-Methyl-1-(4'-β-sulfatoethylsulfonyl)-phenyl-5-pyrazolon bei einem pH-Wert von 5 bis 6. Die daraus resultierende Suspension der erfindungsgemäßen Disazoverbindung wird, bezogen auf das Volumen des Syntheseansatzes, mit 15 % Kaliumchlorid versetzt und auf 80°C erwärmt; die erfindungsgemäße Verbindung wird bei 60 bis 70°C abgesaugt und getrocknet.

Es wird ein elektrolythaltiges gelbes Pulver mit dem Alkalisalz, insbesondere Kaliumsalz, der Verbindung der Formel

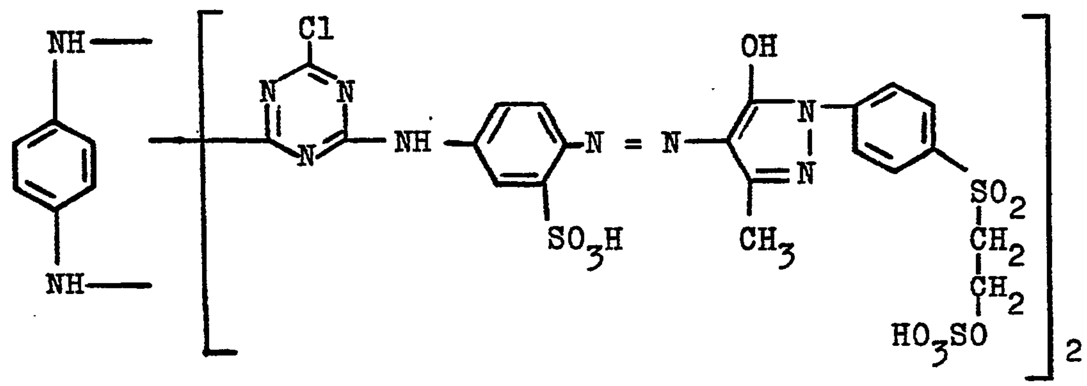

erhalten, die auf Cellulosefasermaterial, wie Baumwolle, nach den für faserreaktive Farbstoffe üblichen Applikationsund Fixierbedingungen, ebenso aber auch aus einem wäßrigen Färbebad unter den Färbebedingungen für Dispersionsfarbstoffe, so bei einer Temperatur zwischen 100 und 130°C und bei einem pH-Wert zwischen 5 und 7, farbstarke goldgelbe Färbungen mit guten Echtheiten, wie guten Licht-, Wasch-, Schweiß-, Wasser-, Bügel-, Abgas- und Sublimationsechtheiten und einer guten Säurelagerbeständigkeit dieser Färbungen liefert.

Beispiel 3

In eine wäßrige Suspension von 74 Teilen Cyanurchlorid rührt man eine neutrale wäßrige Lösung von 75,3 Teilen 1,4-Diaminobenzol-3-sulfonsäure und rührt den Ansatz ohne Zugabe eines säurebindenden Mittels noch etwa 1,5 Stunden nach. Man gibt sodann Eis und 120 Volumenteile einer konzentrierten wäßrigen Salzsäure hinzu and diazotiert in üblicher Weise durch Zugabe von 53 Volumenteilen einer 39%igen wäßrigen Natriumnitritlösung.

Die Diazoniumverbindung wird sodann mit 3-(β-Chlorpropionylamino)-6-sulfo-8-naphthol (120 Teile) in üblicher Weise bei einem pH-Wert zwischen 5 und 6 gekuppelt. Die so erhältliche Monoazoverbindung wird bei einem pH-Wert von 6 aus der Syntheselösung mittels Natriumchlorid ausgesalzen, abfiltriert und erneut in 1500 Teilen Wasser bei einem pH-Wert zwischen 6 und 7 gelöst. Innerhalb einer Stunde gibt man stetig eine Lösung von 21,6 Teilen 1,4-Diaminobenzol in 300 Teilen Wasser und 50 Volumenteilen einer konzentrierten wäßrigen Salzsäure hinzu und rührt den Ansatz bei 30 bis 40°C noch 2 Stunden weiter, wobei man allmählich einen pH-Wert zwischen 6 und 7 mittels Natriumcarbonat einstellt. Wird kein Natriumcarbonat mehr verbraucht, stellt man den Ansatz auf einen pH-Wert von 4 und isoliert die erfindungsgemäße Disazoverbindung durch Aussalzen mit Natriumchlorid.

Das erhaltene erfindungsgemäße Natriumsalz der Verbindung der Formel

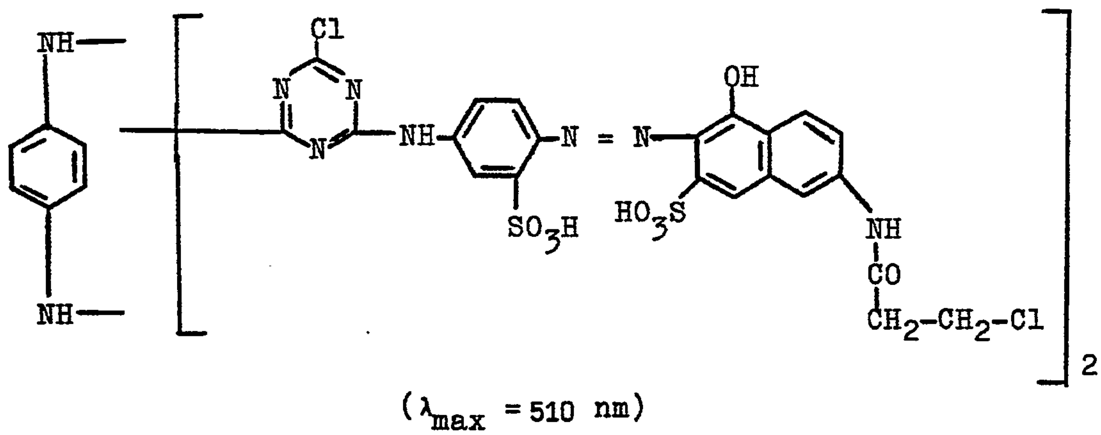

($\lambda_{max}$ = 510 nm)

zeigt sehr gute faserreaktive Farbstoffeigenschaften und liefert insbesondere auf Cellulosefasermaterialien unter Anwendung der für faserreaktive Farbstoffe üblichen Applikations- und Fixiermethoden farbstarke rote Färbungen und Drucke mit guten Echtheiten, von denen insbesondere die guten Licht- und Naßechtheiten, wei Wasch-, Schweiß- und Wasserechtheiten, hervorzuheben sind. Darüber hinaus liefert diese erfindungsgemäße Disazoverbindung auch bei Anwendung im wäßrigen Färbebad bei einer Temperatur zwischen 100 und 130°C und einem pH-Wert zwischen 5 und 7 ebenfalls farbstarke rote, echte Färbungen auf Cellulosefasermaterialien in gleich guter Qualität.

Beispiel 4

Eine neutrale Lösung von 80,4 Teilen N,N'-Di-(3-sulfo-4-amino-phenyl)-harnstoff in 5500 Teilen Wasser gibt man unter gutem Rühren in ein Gemisch aus 200 Teilen Wasser, 400 Teilen Eis, 74 Teilen Cyanurchlorid und 10 Teilen eines handelsüblichen Dispergiermittels. Man rührt 2 Stunden nach und setzt sodann unter Rühren eine neutrale Lösung von 75,3 Teilen 1,3-Diaminobenzol-4-sulfonsäure in 400 Teilen Wasser hinzu, läßt die Temperatur auf 25°C ansteigen und erwärmt weiter innerhalb von 1 Stunde auf 40°C, wobei man den pH auf einen Wert von 5 einstellt und hält. Man rührt eine Stunde bei 40°C nach, erhöht sodann wiederum die Reaktionstemperatur während einer weiteren Stunde auf 50 bis 60°C unter Einhaltung eines pH-Wertes zwischen 4 und 5, rührt weiter, bis zur Einhaltung dieses pH-Bereiches kein weiteres säurebindendes Mittel (wie Natriumbicarbonat) mehr verbraucht wird, kühlt das Reaktionsgemisch ab und diazotiert es in üblicher Weise mittels 40 Volumenteilen einer 39%igen wäßrigen Natriumnitritlösung und 90 Volumenteilen einer wäßrigen konzentrierten Salzsäure. Der Ansatz wird noch 3 Stunden bei etwa 0 bis 5°C nachgerührt und überschüssiges Nitrit entfernt. Als Kupplungskomponente verwendet man 2-(4'-β-Sulfatoethyl-sulfonyl-phenyl-azo)-3,6-disulfo-1-amino-8-naphthol. Man gibt 183 Teile dieser Monoazoverbindung zur Suspension des Diazoniumsalzes hinzu und führt die Kupplungsreaktion bei einem pH-Wert zwischen 6 und 7 und einer Temperatur zwichen 10 und 20°C durch.

Die erfindungsgemäße Disazoverbindung wird mit Kaliumchlorid ausgesalzen und isoliert. Man erhält ein blauschwarzes, elektrolythaltiges Pulver des Alkalimetallsalzes (vorwiegend Kaliumsalzes) der Verbindung der Formel

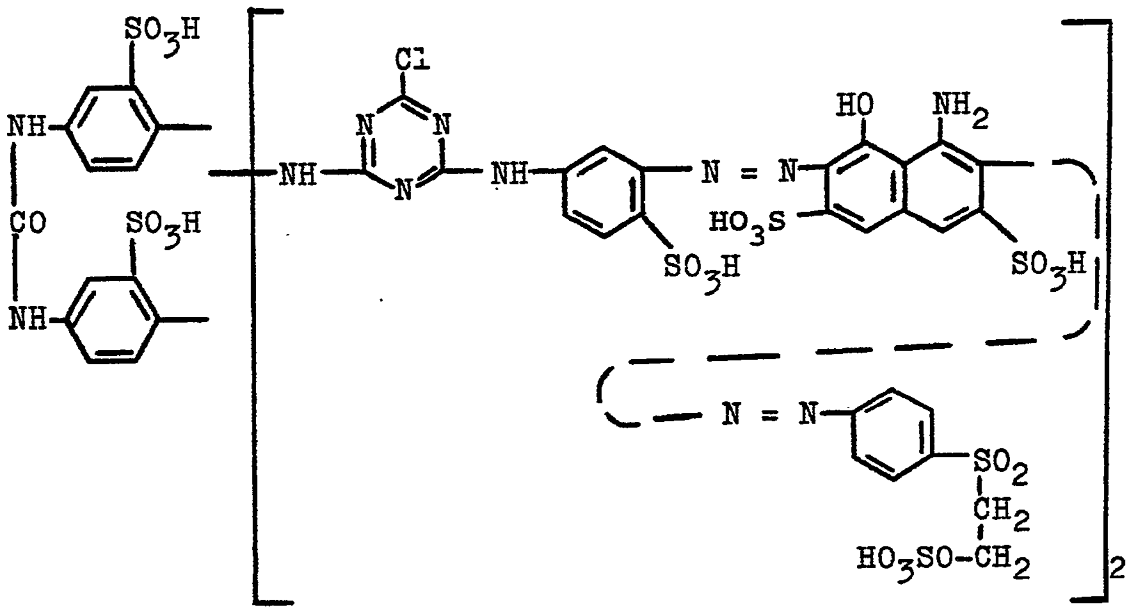

Diese erfindungsgemäße Verbindung besitzt sehr gute faserreaktive Farbstoffeigenschaften und liefert nach den Verfahren der alkalischen Fixierung von faserreaktiven Farbstoffen, so beispielsweise aus langer wäßriger Flotte bei 60 bis 80°C in Gegenwart eines Alkalis auf Cellulosefasermaterialien farbstarke marineblaue Färbungen mit den nachfolgend genannten guten Echtheiten. Mit gleichem Vorteil färbt die erfindungsgemäße Verbindung ohne Alkalizusatz aus wäßrigem Färbebad bei einer Temperatur zwischen 120 und 130°C und einem pH-Wert zwischen 5 und 7 Cellulosefasermaterialien in farbstarken marineblauen Tönen mit guten Echtheiten, von denen insbesondere die guten Licht-, Wasch-, Schweiß-, Wasser-, Bügel- und Abgasechtheiten, desweiteren die sehr hohe Sublimationsechtheit der erfindungsgemäßen Azoverbindung und weiterhin die hohe Säurelagerbeständigkeit dieser Färbungen hervorgehoben werden können.

Beispiel 5

Es wird gemäß der Verfahrensweise des Beispieles 4 das Kondensationsprodukt aus der dort angegebenen Harnstoffverbindung, Cyanurchlorid und 1,3-Diaminobenzol-4-sulfonsäure und anschließend dessen Diazoniumsalz hergestellt.

In einem getrennten Ansatz synthetisiert man die Kupplungskomponente durch Einleiten von 35 Teilen Diketen unter gutem Rühren bei 0 bis 5°C in eine wäßrige Lösung von 97,5 Teilen 4-(β-Sulfatoethylsulfonyl)-2-methoxy-5-methyl-anilin, die mit Essigsäure auf einen pH-Wert zwischen 5 und 6 eingestellt wurde.

Die Lösung der Kupplungskomponente gibt man unter gutem Rühren in die Diazoniumsalzsuspension, stellt einen pH-Wert zwischen 4 und 5 ein und isoliert die erfindungsgemäße Verbindung nach Beendigung der Kupplungsreaktion durch Sprühtrocknung oder durch Aussalzen mittels Kaliumchlorid order Natriumchlorid.

Das erfindungsgemäße Alkalisalz der Verbindung der Formel

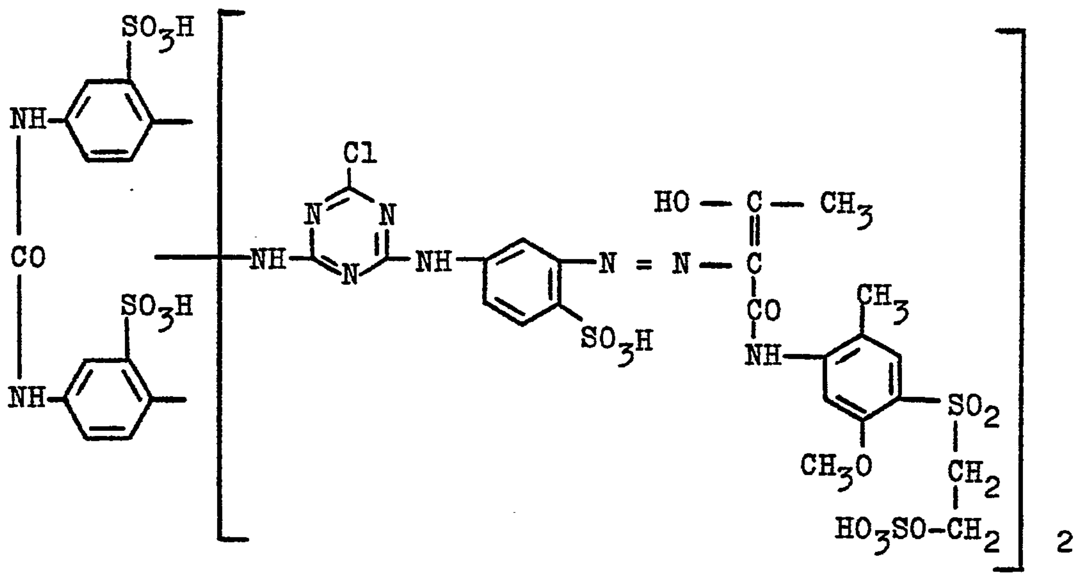

zeigt sehr gute faserreaktive Farbstoffeigenschaften und liefert insbesondere auf Cellulosefasermaterialien, beispielsweise nach den üblichen Applikations- und Fixiermethoden in Gegenwart eines Alkalis, so beispielsweise aus wäßrigem Färbebad bei 60 bis 80°C und in Gegenwart eines Alkalis, ebenso aber auch in Abwesenheit eines Alkalis aus wäßriger Färbeflotte bei einem pH-Wert zwischen 5 und 7 und einer Temperatur zwischen 100 bis 130°C, farbstarke grünstichig gelbe Färbungen mit guten Echtheitseigenschaften, von denen insbesondere die guten Licht- und Naßechtheiten, wie Wasch-, Schweiß- und Wasserechtheiten, hervorzuheben sind.

Beispiele 6 bis 66

Mit den nachfolgenden Tabellenbeispielen werden weitere erfindungsgemäße Disazoverbindungen entsprechend der oben genannten allgemeinen Formel (1) mit Hilfe derer Komponenten beschrieben. Sie lassen sich in erfindungsgemäßer Weise, so beispielsweise nach einem der obigen Ausführungsbeispiele, herstellen und liefern insbesondere auf Cellulosefasermaterialien, wie Baumwolle, nach den für faserreaktive Farbstoffe üblichen Applikations- und Fixierverfahren farbstarke echte Färbungen und Drucke mit den für das jeweilige Tabellenbeispiel angegebenen Farbton. Färbungen auf Cellulosefasermaterialien mit gleich guten Farbstärken und gleich guten Echtheiten werden ebenso bei den Färbebedingungen für das Färben von Polyesterfasern mit Dispersionsfarbstoffen, wie beispielsweise aus wäßrigem Bad bei einer Temperatur zwischen 100 und 130°C und einem pH-Wert zwischen 5 und 7, gegebenenfalls unter Zusatz eines Elektrolytsalzes, wie Natriumsulfat oder Natriumchlorid, erhalten. die in den Tabellenbeispielen angegebene Komponente (C) entspricht dem Rest der allgemeinen Formel (C) entsprechend der Ausgangs- Diaminoverbindung der allgemeinen Formel (13):

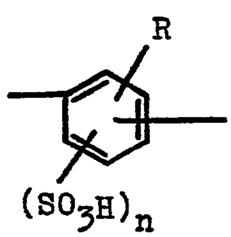

(C)

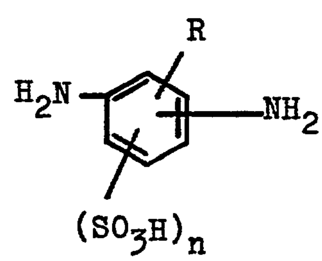

(13)

| Bsp. | Azoverbindungen der allgemeinen Formel (1) mit ... Komponente A | B | Komponente ( C ) | Kupplungskomp. H-K | Nuance auf Baumwolle |
|---|---|---|---|---|---|
| 6 | 2,2'-Disulfo-stilben-4,4'-ylen | Cl | 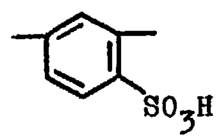 | 1-(4'-ß-Sulfatoethyl-sulfonyl-phenyl)-3-carboxy-5-pyrazolon | grünstichig gelb |
| 7 | dito | Cl | dito | 1-(4'-Vinylsulfonyl-phenyl)-3-methyl-5-pyrazolon | gelbstichig grün |
| 8 | dito | Cl | 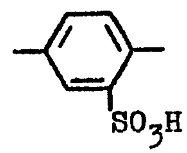 | dito | rotstichig gelb |
| 9 | dito | Cl | dito | 1-(4'-ß-Sulfatoethyl-sulfonyl-phenyl)-3-carboxy-5-pyrazolon | rotstichig gelb |
| 10 | dito | F | dito | dito | rotstichig gelb |
| 11 | 2,2'-Disulfo-4,4'-diphenylen | Cl | dito | dito | rotstichig gelb |
| 12 | dito | Cl | dito | 1-(4'-ß-Sulfatoethyl-sulfonyl-phenyl)-3-methyl-5-pyrazolon | rotstichig gelb |

| Bsp. | Azoverbindungen der allgemeinen Formel (1) mit ...<br>Komponente A | B | Komponente (C) | Kupplungskomp. H-K | Nuance auf Baumwolle |
|---|---|---|---|---|---|
| 13 | 2,2'-Disulfo-4,4'-diphenylen | Cl | 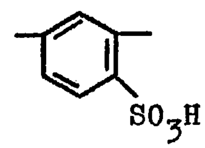 | 1-(4'-ß-Sulfatoethyl-sulfonyl-phenyl)-3-methyl-5-pyrazolon | grünstichig gelb |
| 14 | 3,3'-Disulfo-4,4'-diphenylen | Cl | dito | dito | grünstichig gelb |
| 15 | dito | Cl | 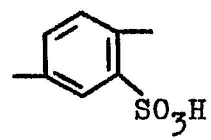 | dito | rotstichig gelb |
| 16 | 1,4-Phenylen | Cl | dito | dito | grünstichig gelb (417 nm) |
| 17 | dito | F | dito | dito | grünstichig gelb |
| 18 | dito | F | dito | 1-(4'-ß-Sulfatoethyl-sulfonyl-phenyl)-3-carb-oxy-5-pyrazolon | rotstichig gelb |
| 19 | dito | Cl | 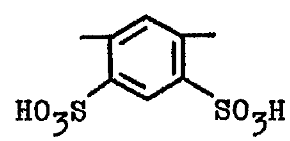 | 1-(4'-Vinylsulfonyl-phenyl)-5-pyrazolon | grünstichig gelb |

| Bsp. | Azoverbindungen der allgemeinen Formel (1) mit ... Komponente A | B | Komponente ( C ) | Kupplungskomp. H-K | Nuance auf Baumwolle |
|---|---|---|---|---|---|
| 20 | 1,4-Phenylen | Cl | 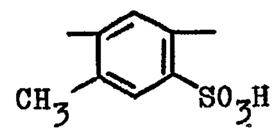 | 1-(4'-Vinylsulfonyl-phenyl)-5-pyrazolon | grünstichig gelb |
| 21 | dito | Cl | 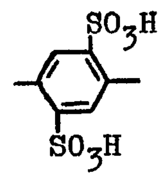 | dito | grünstichig gelb |
| 22 | dito | Cl | 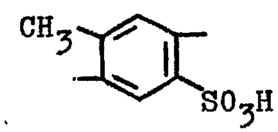 | 1-(4'-ß-Thiosulfatoethyl-sulfonyl-phenyl)-3-methyl-5-pyrazolon | rotstichig gelb |
| 23 | dito | Cl | 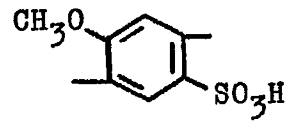 | dito | rotstichig gelb |
| 24 | dito | Cl | 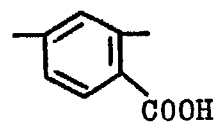 | dito | grünstichig gelb |
| 25 | 2-Sulfo-1,4-phenylen | Cl | 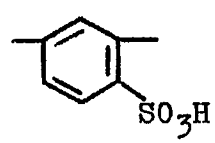 | dito | grünstichig gelb |

| Bsp. | Azoverbindungen der allgemeinen Formel (1) mit ... Komponente A | B | Komponente ( C ) | Kupplungskomp. H-K | Nuance auf Baumwolle |
|---|---|---|---|---|---|
| 26 | 1,4-Phenylen | Cl | 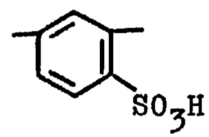 | 1-(4'-ß-Sulfatoethyl-sulfonyl-phenyl)-3-carb-oxy-5-pyrazolon | grünstichig gelb |
| 27 | dito | Cl | 1,4-Phenylen | dito | rotstichig gelb |
| 28 | 2,5-Disulfo-1,4-phenylen | Cl | dito | dito | rotstichig gelb |
| 29 | dito | F | dito | dito | rotstichig gelb |
| 30 | dito | F | 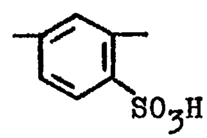 | dito | grünstichig gelb |
| 31 | dito | Cl | dito | 1-(4'-ß-Sulfatoethyl-sulfonyl-phenyl)-3-methyl-5-pyrazolon | grünstichig gelb |
| 32 | dito | F | dito | dito | grünstichig gelb |

| Bsp. | Azoverbindungen der allgemeinen Formel (1) mit ... Komponente A | B | Komponente (C) | Kupplungskomp. H-K | Nuance auf Baumwolle |
|---|---|---|---|---|---|
| 33 | 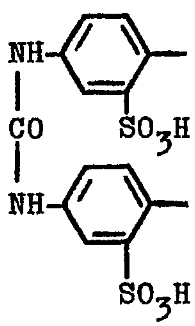 | Cl | 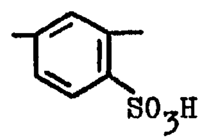 | 1-(4'-ß-Sulfatoethyl-sulfonyl-phenyl)-3-methyl-5-pyrazolon | grünstichig gelb |
| 34 | dito | Cl | 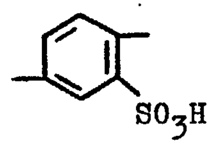 | dito | rotstichig gelb |
| 35 | dito | F | dito | dito | rotstichig gelb |
| 36 | dito | Cl | dito | 1-(4'-ß-Thiosulfatoethyl-sulfonyl-phenyl)-3-carb-oxy-5-pyrazolon | rotstichig gelb |
| 37 | dito | Cl | 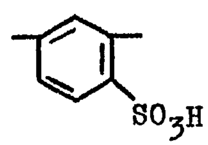 | dito | grünstichig gelb |
| 38 | dito | Cl | dito | 1-(4'-ß-Sulfatoethylsul-fonyl-phenyl)-3-carboxy-5-pyrazolon | grünstichig gelb |

| Bsp. | Azoverbindungen der allgemeinen Formel (1) mit ... Komponente A | B | Komponente ( C ) | Kupplungskomp. H-K | Nuance auf Baumwolle |
|---|---|---|---|---|---|
| 39 | 1,4-Phenylen | Cl | 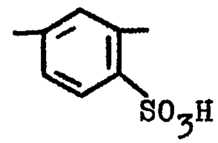 | 2-(ß-Chlorpropionylamino)-6-sulfo-8-naphthol | blaustichig rot |
| 40 | dito | Cl | dito | 2-[4'-(4"-ß-Sulfatoethyl-sulfonyl-phenyl)-amino-2'-chlor-s-triazin-6'-yl]-amino-6-sulfo-8-naphthol | blaustichig rot |
| 41 | dito | Cl | dito | 3-[4'-(4"-ß-Sulfatoethyl-sulfonyl-phenyl)-amino-2'-chlor-s-triazin-6'-yl]-amino-6-sulfo-8-naphthol | rotstichig orange |
| 42 | dito | Cl | 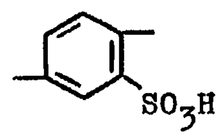 | dito | blaustichig rot |
| 43 | dito | Cl | dito | 3-N-Methyl-N-[4'-(3"-ß-sulfatoethylsulfonyl-phenyl)-amino-2'-chlor-s-triazin-6'-yl]-amino-6-sulfo-8-naphthol | blaustichig rot |

| Bsp. | Azoverbindungen der allgemeinen Formel (1) mit ... Komponente A | B | Komponente (C) | Kupplungskomp. H-K | Nuance auf Baumwolle |
|---|---|---|---|---|---|
| 44 | 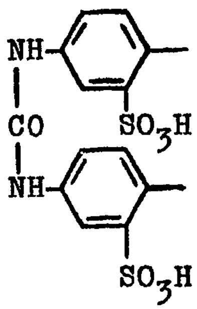 | Cl | 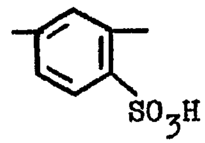 | 2-(4'-ß-Sulfatoethylsulfonyl-2',5'-dimethoxy-phenyl-azo)-3,6-disulfo-1-amino-8-naphthol | grünstichig marineblau |
| 45 | dito | Cl | 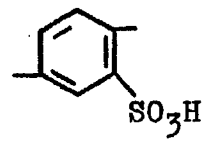 | dito | grünstichig marineblau |
| 46 | 3,3'-Disulfo-4,4'-diphenylen | Cl | dito | 2-(4'-ß-Sulfatoethylsulfonyl-phenyl-azo)-4,6-disulfo-1-amino-8-naphthol | grünstichig marineblau |
| 47 | dito | Cl | 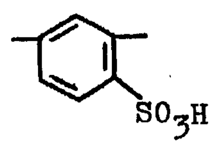 | dito | rotstichig marineblau |

| Bsp. | Azoverbindungen der allgemeinen Formel (1) mit ... Komponente A | B | Komponente ( C ) | Kupplungskomp. H-K | Nuance auf Baumwolle |
|---|---|---|---|---|---|
| 48 | 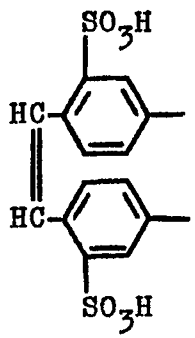 | Cl | 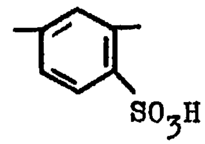 | 2-(4'-ß-Sulfatoethyl-sulfonyl-phenyl-azo)-4,6-disulfo-1-amino-8-naphthol | rotstichig marineblau |
| 49 | dito | F | dito | dito | rotstichig marineblau |
| 50 | dito | Cl | dito | 2-(4'-Vinylsulfonyl-phenyl-azo)-3,6-disulfo-1-amino-8-naphthol | rotstichig marineblau (608 nm) |
| 51 | 1,4-Phenylen | Cl | 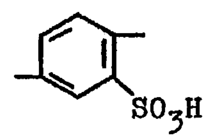 | dito | grünstichig marineblau (610 nm) |
| 52 | 2-Sulfo-1,4-phenylen | Cl | 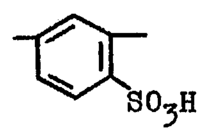 | dito | rotstichig marineblau |

| Bsp. | Azoverbindungen der allgemeinen Formel (1) mit ... Komponente A | B | Komponente ( C ) | Kupplungskomp. H-K | Nuance auf Baumwolle |
|---|---|---|---|---|---|
| 53 | 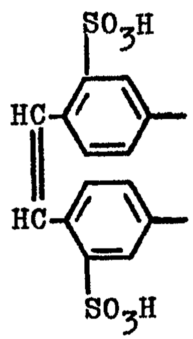 | Cl | 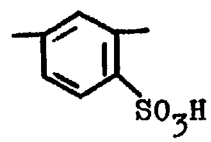 | N-(4-ß-Sulfatoethylsulfonyl-2-methoxy-5-methyl)-acetoacetyl-anilid | grünstichig gelb |
| 54 | 2,5-Disulfo-1,4-phenylen | Cl | dito | dito | grünstichig gelb |
| 55 | 3,3'-Disulfo-4,4'-diphenylen | Cl | dito | dito | grünstichig gelb |
| 56 | 2,2'-Disulfo-4,4'-diphenylen | Cl | dito | dito | grünstichig gelb |
| 57 | 1,4-Phenylen | Cl | 2,5-Disulfo-1,4-phenylen | N-(4'-ß-Sulfatoethylsulfonyl-2,5-dimethoxy)-acetoacetyl-anilid | gelb |

| Bsp. | Azoverbindungen der allgemeinen Formel (1) mit ... Komponente A | B | Komponente (C) | Kupplungskomp. H-K | Nuance auf Baumwolle |
|---|---|---|---|---|---|
| 58 | 2,5-Disulfo-1,4-phenylen | Cl | 2,5-Disulfo-1,4-phenylen | 3-[4'-(4"-ß-Sulfatoethyl-sulfonyl-phenyl)-amino-2'-chlor-s-triazin-6'-yl]-amino-6-sulfo-8-naphthol | blaustichig rot |
| 59 | 3,3'-Disulfo-4,4'-diphenylen | Cl | dito | dito | blaustichig rot |
| 60 | 2,2'-Disulfo-4,4'-diphenylen | Cl | dito | dito | blaustichig rot |
| 61 | 1,4-Phenylen | Cl | 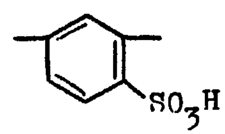 | 1-(4'-β-Sulfatoethylsul-fonyl-phenyl)-3-methyl-5-pyrazolon | grünstichig gelb (395 nm) |
| 62 | 2,5-Disulfo-1,4-phenylen | Cl | dito | dito | grünstichig gelb (350 nm) |
| 63 | 1,4-Phenylen | Cl | dito | 2-(4'-β-Sulfatoethylsul-fonyl-phenyl-azo)-3,6-disulfo-1-amino-8-naphthol | marineblau (612 nm) |

| Bsp. | Azoverbindungen der allgemeinen Formel (1) mit ... Komponente A | B | Komponente (C) | Kupplungskomp. H-K | Nuance auf Baumwolle |
|---|---|---|---|---|---|
| 64 | dito | Cl | 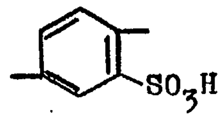 | dito | grünstichig blau (605 nm) |
| 65 | 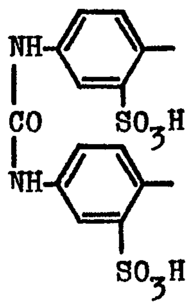 | Cl | 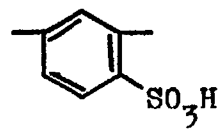 | 2-(4'-ß-Sulfatoethylsulfonyl-phenyl-azo)-3,6-disulfo-1-amino-8-naphthol | marineblau (604 nm) |
| 66 | 2,2'-Disulfo-4,4'-diphenylen | Cl | dito | dito | marineblau (610 nm) |

Färbebeispiel 1

50 Teile eines Baumwollgewebes gibt man in ein Färbebad aus 1 Teil der erfindungsgemäßen Disazoverbindung von Beispiel 1 (in Form des neutralen Salzes), 50 Teilen wasserfreiem Natriumsulfat, 800 Teilen Wasser und 200 Teilen einer wäßrigen Pufferlösung, die aus 200 Teilen Wasser und 20 Teilen 85%iger Phosphorsäure zubereitet und mit Natronlauge auf einen pH-Wert von 6 gestellt wird. Das Gewebe wird in dem Bad bei einer Temperatur von 130°C während 90 Minuten unter ständiger Bewegung behandelt. Anschließend wird die erhaltene Färbung durch Spülen mit warmem und mit heißem Wasser, durch Waschen in einem wäßrigen Bad aus 1500 Teilen Wasser und 1,5 Teilen eines nichtionogenen Mittels bei Kochtemperatur während 15 Minuten und durch erneutes Spülen mit warmem Wasser nachbehandelt und getrocknet.

Es wird eine kräftige grünstichig gelbe Färbung mit den in Beispiel 1 genannten Echtheiten und einer guten Reibechtheit erhalten. Darüberhinaus zeigt die erfindungsgemäße Verbindung einen guten Farbaufbau in diesem Färbeverfahren.

Führt man das Färbeverfahren nicht bei einem pH-Wert von 6, sondern bei einem pH-Wert von 5, von 7 oder 8 durch, so erhält man gleichgute grünstichig gelbe Färbungen mit praktisch gleicher Farbstärke wie bei der bei pH 6 hergestellten Färbung.

Färbebeispiel 2

Setzt man die erfindungsgemäße Disazoverbindung des Beispieles 1 zum Färben von Cellulosefasermaterial, wie Baumwollgewebe, nach einem für faserreaktive Farbstoffe üblichen Färbeverfahren ein, wie beispielsweise im Ausziehverfahren bei einer Temperatur von 60°C oder 80°C in Gegenwart eines alkalisch wirkenden Mittels, wie Natriumcarbonat und Natronlauge, und eines Elektrolytsalzes wie Natriumsulfat, so erhält man ebenfalls sehr farbstarke grünstichig gelbe Färbungen mit den genannten guten Echtheiten.

Färbebeispiel 3

100 Teile eines Mischgewebes aus gleichen Teilen Polyesterund Cellulosefasern wird in der üblichen Färbemethode für Polyesterfasern in 2000 Teilen eines neutralen wäßrigen Bades mit einem Gehalt von 2 Teilen einer Handelsware von C.I. Disperse Red 73 (Colour Index Nr. 11 116) und 2 Teilen des erfindungsgemäßen Disazofarbstoffes von Beispiel 39 90 Minuten bei 130°C gefärbt. Man erhält ein egal und stark durchgefärbtes Gewebe von gleichmäßiger blaustichig roter Nuance.

Führt man die Färbung nur mit dem Dispersionsfarbstoff durch, so werden lediglich die Polyester-Schußfäden gefärbt, so daß das Gewebe unruhig und schwach rötlich gefärbt erscheint.

Einen ähnlichen Eindruck erweckt das gefärbte Gewebe, das man in gleicher Verfahrensweise erhält, wenn lediglich die erfindungsgemäße Disazoverbindung in das Färbebad eingesetzt wird, da in diesem Falle nur die aus Cellulosefasern bestehenden Kettfäden angefärbt werden.

## Patentansprüche

1. Wasserlösliche Verbindung entsprechend der allgemeinen Formel (1)

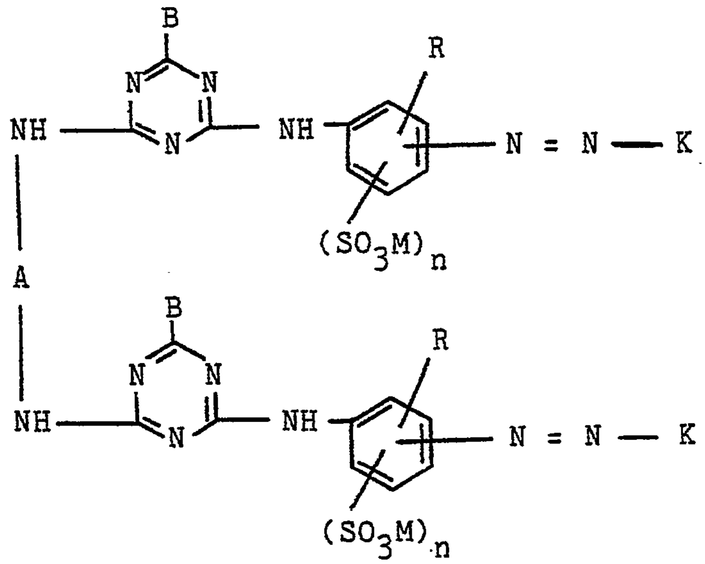

(1)

in welcher bedeuten:

A ist eine Alkylengruppe von 2 bis 6 C-Atomen oder ist ein Phenylenrest, der durch 1 oder 2 Substituenten aus der Gruppe Alkoxy von 1 bis 4 C-Atomen, Alkyl von 1 bis 4 C-Atomen, Chlor, Sulfo und Carboxy substituiert sein kann, oder ist ein Rest der allgemeinen Formel (2)

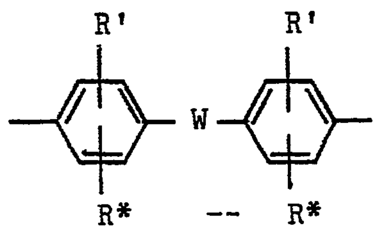

(2)

in welcher W eine direkte Bindung oder eine Gruppe der Formel $-CH_2-$, $-CH_2-CH_2-$, $-O-CH_2-CH_2-O-$, $-CH=CH-$, $-N=N$, $-NH-CO-NH-$ oder $-CO-NH-$ ist und die R' und R* jedes ein Wasserstoffatom, ein Chloratom, eine Methyl-, Methoxy-, Ethoxy-, Carboxy- oder Sulfogruppe bedeuten; B ist ein Chlor- oder ein Fluoratom;

R ist ein Wasserstoff- oder ein Chloratom, eine Alkylgruppe von 1 bis 4 C-Atomen oder eine Alkoxygruppe von 1 bis 4 C-Atomen;

M ist ein Wasserstoffatom oder ein Alkalimetall;

n steht für die Zahl Null, 1 oder 2 (wobei im Falle n = 0 diese Gruppe ein Wasserstoffatom bedeutet);

K ist ein Rest der allgemeinen Formel (3), (4), (5) oder (6)

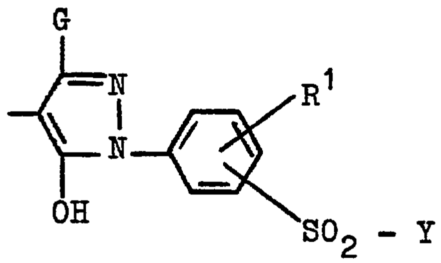 (3)

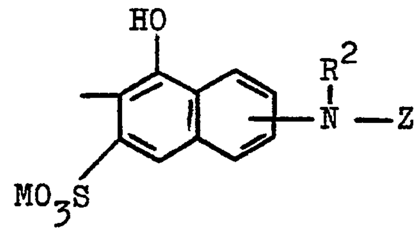 (4)

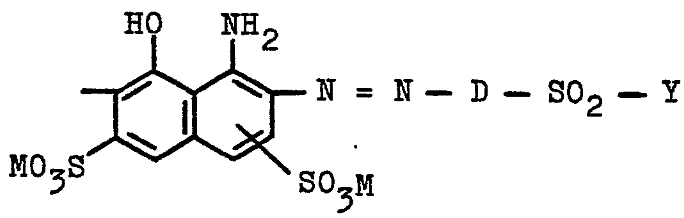 (5)

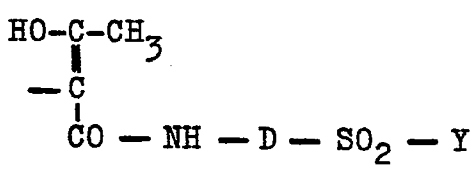 (6)

in welchen

D ein Phenylenrest ist, der durch 1 oder 2 Substituenten aus der Gruppe Chlor, Brom, Alkyl von 1 bis 4 C-Atomen, Alkoxy von 1 bis 4 C-Atomen, Carboxy und Sulfo substituiert sein kann, oder ein Naphthylenrest ist, der durch 1 oder 2 Sulfogruppen substituiert sein kann,

$R^1$ ein Wasserstoffatom, ein Chloratom, eine Alkylgruppe von 1 bis 4 C-Atomen oder eine Alkoxygruppe von 1 bis 4 C-Atomen bedeutet.

$R^2$ ein Wasserstoffatom oder eine Alkylgruppe von 1 bis 4 C-Atomen ist,

G eine Carboxy-, Methyl- oder Carbalkoxygruppe von 2 bis 5 C-Atomen ist,

Y eine Vinyl-, β-Sulfatoethyl-, β-Phosphatoethyl-, β-Thiosulfatoethyl- oder β-Chlorethyl-Gruppe bedeutet,

M die obengenannte Bedeutung hat und

Z der α- oder β-Brom-acryloyl-Rest oder β-Chlorpropionyl-Rest oder ein Rest der allgemeinen Formel (3a)

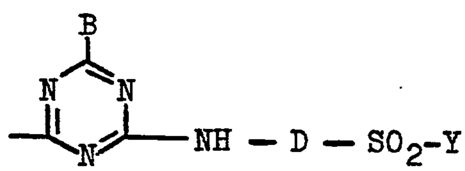 (3a)

mit B, D und Y der obengenannten Bedeutungen ist.

2. Verbindung nach Anspruch 1, dadurch gekennzeichnet, daß die zweifach auftretenden Formelglieder jeweils die gleiche Bedeutung besitzen.

3. Verbindung nach Anspruch 1 oder 2, dadurch gekennzeichnet, daß die Formelglieder B jedes ein Chloratom bedeuten.

4. Verbindung nach Anspruch 1 oder 2 der allgemeinen Formel (1), in welcher

A eine Alkylengruppe von 2 bis 6 C-Atomen oder ein Phenylenrest, der durch 1 oder 2 Substituenten aus der Gruppe Alkoxy von 1 bis 4 C-Atomen, Alkyl von 1 bis 4 C-Atomen, Chlor, Sulfo und Carboxy substituiert sein kann, ist, oder

A ein Rest der allgemeinen Formel (2a)

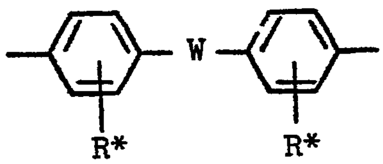

(2a)

ist, in welcher W eine direkte Bindung oder ein Brückenglied der Formel $-CH_2-$ , $-CH_2-CH_2-$ , $-O-CH_2-CH_2-O-$ , -CH=CH- , -N=N- , -NH-CO-NH- oder -CO-NH- ist und die R* zueinander gleich oder voneinander verschieden, jedes ein Wasserstoffatom, ein Chloratom, eine Methyl-, Methoxy-, Ethoxy-, Carboxy- oder Sulfogruppe bedeuten,
B ein Chloratom ist und M, K, R und n die in Anspruch 1 genannten Bedeutungen haben.

5. Verbindung nach mindestens einem der Ansprüche 1 bis 4, dadurch gekennzeichnet, daß Y in K die Vinyl- oder β-Sulfatoethyl-Gruppe bedeutet.

6. Verbindung nach mindestens einem der Ansprüche 1 bis 4, dadurch gekennzeichnet, daß der Formelrest D in den Formelgliedern K ein Phenylenrest ist, der durch 1 oder 2 Substituenten aus der Gruppe Chlor, Brom, Alkyl von 1 bis 4 C-Atomen, Alkoxy von 1 bis 4 C-Atomen, Carboxy und Sulfo substituiert sein kann.

. Verbindung nach mindestens einem der Ansprüche 1 bis 6, dadurch gekennzeichnet, daß R ein Wasserstoffatom bedeutet.

8. Verbindung nach mindestens einem der Ansprüche 1 bis 7, dadurch gekennzeichnet, daß K ein Rest der allgemeinen Formel (3)

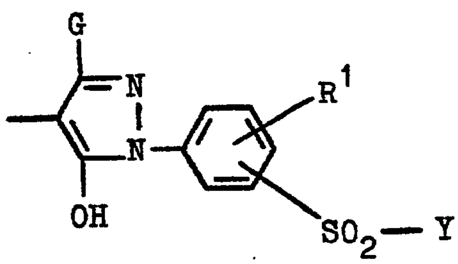

(3)

ist, in welcher G für die Methyl- oder Carboxygruppe steht, $R^1$ ein Wasserstoffatom, ein Chloratom, eine Alkylgruppe von 1 bis 4 C-Atomen oder eine Alkoxygruppe von 1 bis 4 C-Atomen bedeutet und Y die in Anspruch 1 oder 5 genannte Bedeutung besitzt.

9. Verbindung nach mindestens einem der Ansprüche 1 bis 5 und 7, dadurch gekennzeichnet, daß K ein Rest der allgemeinen Formel (4)

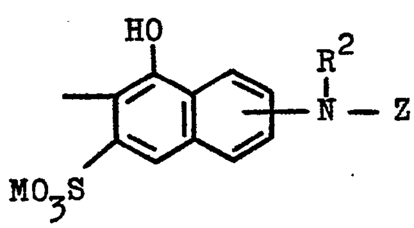

(4)

ist, in welcher M ein Wasserstoffatom oder ein Alkalimetall bedeutet, $R^2$ ein Wasserstoffatom oder eine Alkylgruppe von 1 bis 4 C-Atomen ist und Z die β-Chlorpropionyl-Gruppe oder eine Gruppe der allgemeinen Formel (3a)

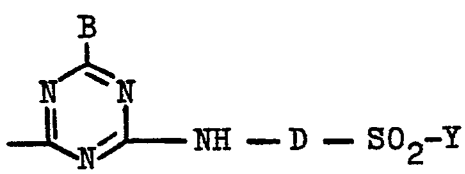

(3a)

ist, in welcher B ein Chlor- oder Fluoratom bedeutet, Y die in Anspruch 1 oder 5 genannte Bedeutung besitzt und D ein Phenylenrest ist, der durch 1 oder 2 Substituenten aus der Gruppe Chlor, Brom, Alkyl von 1 bis 4 C-Atomen, Alkoxy von 1 bis 4 C-Atomen, Carboxy und Sulfo substituiert ist oder D bevorzugt einen unsubstituierten Phenylenrest bedeutet.

10. Verbindung nach mindestens einem der Ansprüche 1 bis 5 und 7, dadurch gekennzeichnet, daß K ein Rest der allgemeinen Formel (5)

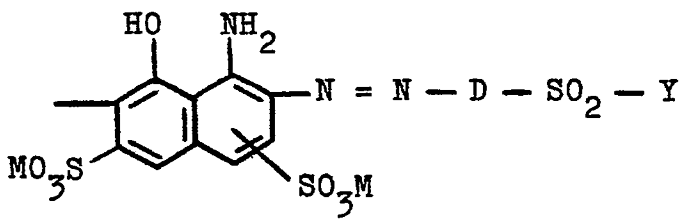

(5)

ist, in welcher M ein Wasserstoffatom oder ein Alkalimetallatom bedeutet, D ein Phenylenrest ist, der durch 1 oder 2 Substituenten aus der Gruppe Chlor, Brom, Alkyl von 1 bis 4 C-Atomen, Alkoxy von 1 bis 4 C-Atomen, Carboxy und Sulfo substituiert ist oder D bevorzugt einen unsubstituierten Phenylenrest bedeutet und Y die in Anspruch 1 oder 5 genannte Bedeutung besitzt.

11. Verbindung nach mindestens einem der Ansprüche 1 bis 5 und 7, dadurch gekennzeichnet, daß D ein Phenylenrest ist, der durch 1 oder 2 Substituenten aus der Gruppe Chlor, Brom, Alkyl von 1 bis 4 C-Atomen, Alkoxy von 1 bis 4 C-Atomen, Carboxy und Sulfo substituiert ist oder D bevorzugt einen unsubstituierten Phenylenrest bedeutet und Y die in Anspruch 1 oder 5 genannte Bedeutung besitzt.

12. Verbindung nach mindestens einem der Ansprüche 1 bis 11, dadurch gekennzeichnet, daß W eine direkte Bindung bedeutet oder eine Gruppe der Formel -CH=CH- oder -NH-CO-NH- ist.

13. Verfahren zur Herstellung der in Anspruch 1 genannten und definierten Azoverbindungen der allgemeinen Formel (1), dadurch gekennzeichnet, daß man

a) eine aromatische Aminoverbindung der allgemeinen Formel (7)

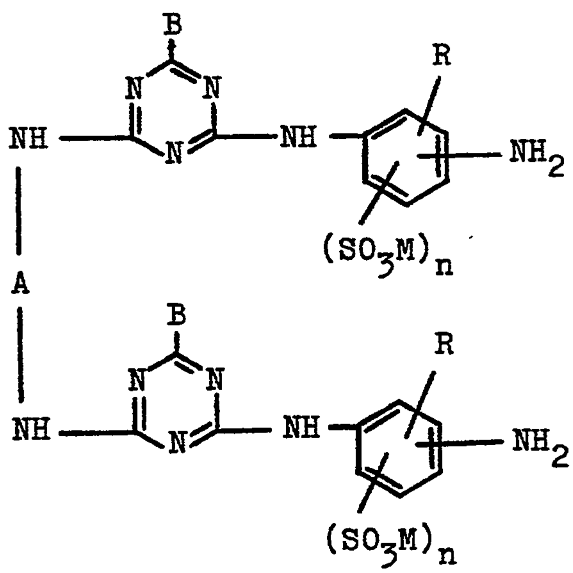

(7)

in welcher A, B, R, M und n die in Anspruch 1 genannten Bedeutungen haben, tetrazotiert und mit einer Kupplungskomponente der allgemeinen Formel (8)

H–K (8)

in welcher K die in Anspruch 1 genannte Bedeutung besitzt, oder mit zwei verschiedenen Kupplungskomponenten der allgemeinen Formel (8) in äquivalenter Menge kuppelt, oder

b) daß man eine Dihalogentriazinyl-Azoverbindung der allgemeinen Formel (9)

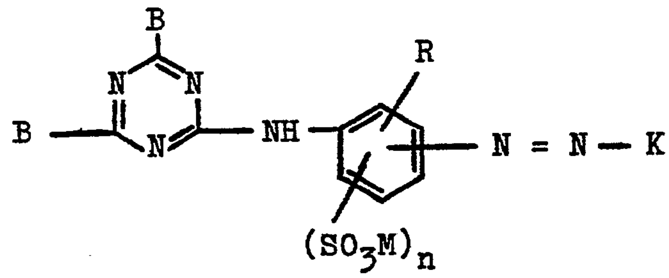

(9)

in welcher B, K, R, M und n die in Anspruch 1 genannten Bedeutungen haben und beide Formelglieder B eine zueinander gleiche Bedeutung besitzen, oder zwei verschiedene Verbindungen der allgemeinen Formel (9) in äquivalenter Menge mit einer Diaminoverbindung der allgemeinen Formel (10)

$H_2N - A - NH_2$ (10)

mit A der in Anspruch 1 genannten Bedeutung umsetzt.

14. Verwendung einer in Anspruch 1 genannten und definierten Verbindung der allgemeinen Formel (1) als Farbstoff.

15. Verwendung nach Anspruch 14 zum Färben von hydroxyund/oder carbonamidgruppenhaltigem Material, vorzugsweise Fasermaterial.

16. Verwendung nach Anspruch 15, dadurch gekennzeichnet, daß das Fasermaterial ein Cellulosefaser-Polyesterfaser-Gemisch oder ein Cellulosefaser-Celluloseacetatfaser-Gemisch ist.

17. Verfahren zum Färben (einschließlich Bedrucken) von hydroxy- und/oder carbonamidgruppenhaltigem Material, vorzugsweise Fasermaterial, bei welchem man einen Farbstoff auf das Material aus wäßriger Lösung aufbringt und ihn mittels Wärme und/oder mit Hilfe eines alkalisch wirkenden Mittels fixiert, dadurch gekennzeichnet, daß man als Farbstoff eine Verbindung von Anspruch 1 einsetzt.

18. Verfahren zum Färben von hydroxygruppenhaltigem Fasermaterial, vorzugsweise Cellulosefasermaterial, dadurch gekennzeichnet, daß man eine Verbindung von Anspruch 1 auf das Material in wäßriger Lösung aufbringt und sie aus der wäßrigen Lösung bei einem pH-Wert zwischen 4 und 8 und bei einer Temperatur zwischen 100 und 150°C auf das Material einwirken läßt und auf dem Material fixiert.

19. Verfahren nach Anspruch 18, dadurch gekennzeichnet, daß man bei einem pH-Wert zwischen 5 und 7,5 färbt.

20. Verfahren nach Anspruch 18 oder 19, dadurch gekennzeichnet, daß man als Fasermaterial ein Cellulosefaser-Polyesterfaser-Gemisch oder ein Cellulosefaser-Cellulosetriacetatfaser-Gemisch einsetzt.

21. Verfahren nach Anspruch 20, dadurch gekennzeichnet, daß man zusätzlich einen Dispersionsfarbstoff einsetzt.

## ZUSAMMENFASSUNG

Wasserlösliche Verbindungen mit faserreaktiven Farbstoffeigenschaften der allgemeinen Formel

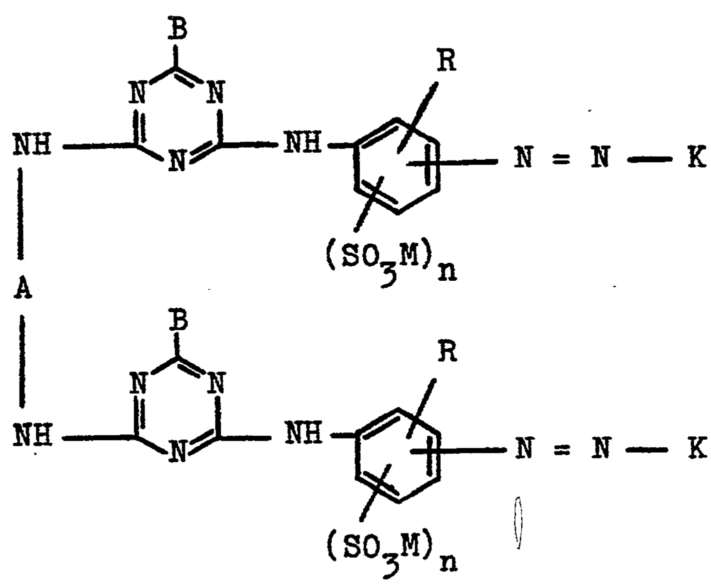

worin bedeuten: A ist ein Alkylen von 2 bis 6 C-Atomen, ein Phenylen, das durch 1 oder 2 Substituenten substituiert sein kann, oder ein Rest der Formel (2)

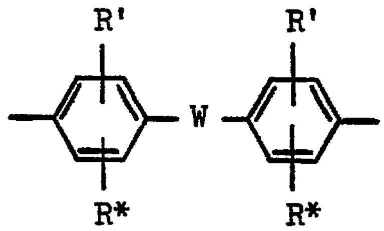

mit W gleich einer direkten Bindung odr einem organischen Brückenglied und mit R' und R* jedes Wasserstoff, Chlor, Methyl, Methoxy, Ethoxy, Carboxy oder Sulfo, B ist Chlor oder Fluor,

R ist Wasserstoff, Chlor, Alkyl von 1 bis 4 C-Atomen oder Alkoxy von 1 bis 4 C-Atomen, M ist Wasserstoff oder ein Alkalimetall, n ist die Zahl Null, 1 oder 2, K ist ein Rest der Formel

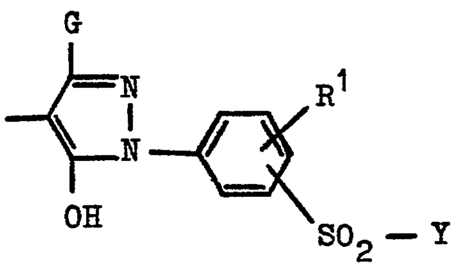

oder

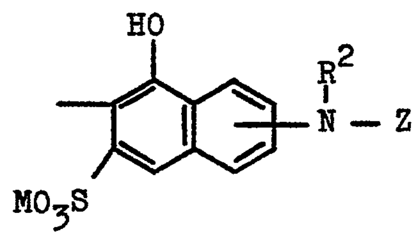

oder

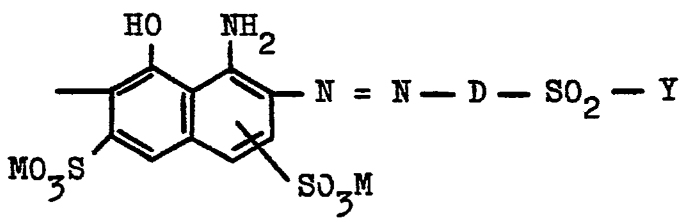

oder

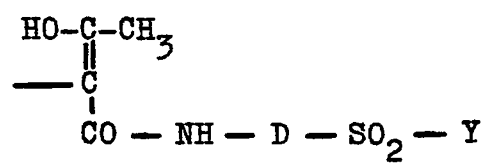

mit D gleich Phenylen, das durch Chlor, Brom, Alkyl von 1 bis 4 C-Atomen, Alkoxy von 1 bis 4 C-Atomen, Alkoxy von 1 bis 4 C-Atomen, Carboxy und Sulfo substituiert sein kann, oder gleich Naphthylen mit gegebenenfalls 1 oder 2 Sulfogruppen, R1 gleich Wasserstoff, Chlor, Alkyl von 1 bis 4 C-Atomen, Alkoxy von 1 bis 4 C-Atomen,

R2 gleich Wasserstoff oder Alkyl von 1 bis 4 C-Atomen, G gleich Carboxy, Methyl oder Carbalkoxy von 2 bis 5 C-Atomen,

Y gleich Vinyl, b-Sulfatoethyl, b-Phosphatoethyl, b-Thiosulfatoethyl- oder b-Chlorethyl und Z gleich a- oder b-Brom-acryloyl- oder b-Chlor-propionyl oder einem Rest der Formel

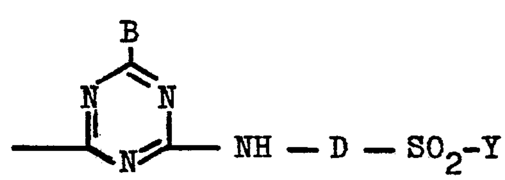

mit B, D und Y der obigen Bedeutung.

Die neuen Farbstoffe sind zum Färben von hydroxy- und/oder carbonamidgruppenhaltigem Material geeignet; auf hydroxygruppenhaltigem Material, wie Cellulosefasern, werden sie nicht nur im alkalischen, sondern auch im schwach sauren bis neutralen Bereich fixiert, so daß sie zusammen mit Dispersionsfarbstoffen zu Färben von Mischmaterial aus Cellulose- und Polyester fasern nach den Färbmethoden für Dispersionsfarbstoffe eingesetzt werden können.

**Claims**

1. A water-soluble compound conforming to the general formula (1)

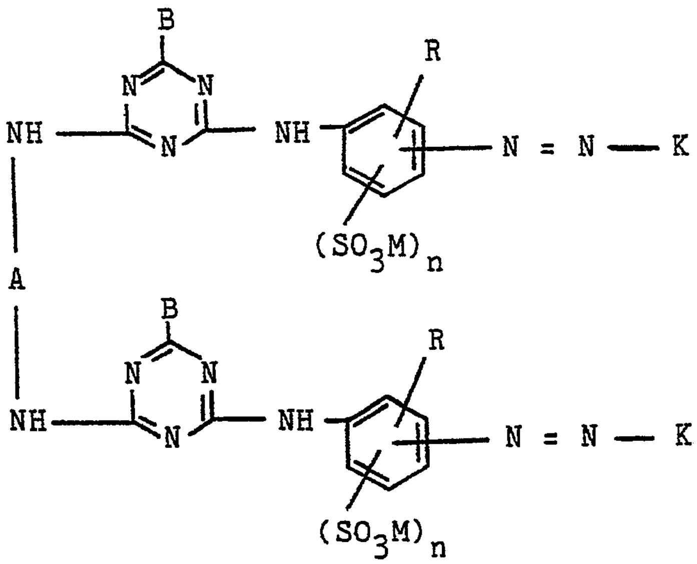

(1)

in which the meanings are:

A is an alkylene group of 2 to 6 carbon atoms or is a phenylene radical which can be substituted by 1 or 2 substituents from the group alkoxy of 1 to 4 carbon atoms, alkyl of 1 to 4 carbon atoms, chlorine, sulfo and carboxyl, or is a radical of the general formula (2)

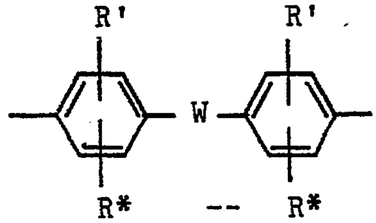

(2)

in which

W is a direct bond or a group of the formula $-CH_2-$, $-CH_2-CH_2$, $-O-CH_2-CH_2-O-$, $-CH=CH-$, $-N=N-$, $-NH-CO-NH-$ or $-CO-NH-$ and each R`, and R* denote a hydrogen atom, a chlorine atom, a methyl, methoxy, ethoxy, carboxyl or sulfo group;

B is a chlorine or a fluorine atom;

R is a hydrogen or a chlorine atom, an alkyl group of 1 to 4 carbon stoms or an alkoxy group of 1 to 4 carbon atoms;

N is a hydrogen atom or an alkali metal;

n stands for the number zero, 1 or 2 (where in the case of n= 0 this group denotes a hydrogen atom);

K is a radical of the general formula (3), (4), (5) or (6)

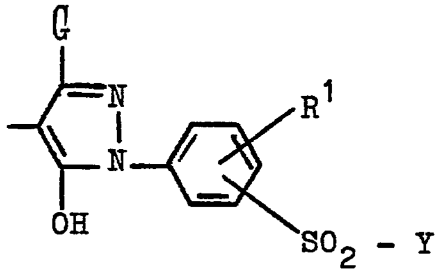
(3)

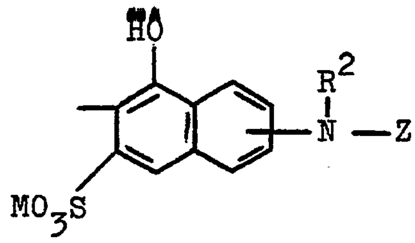
(4)

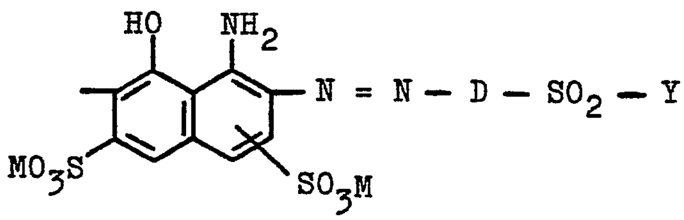
(5)

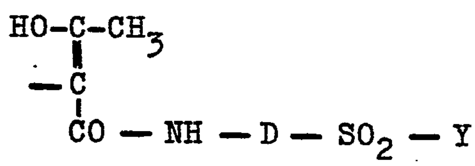
(6)

in which

D is a phenylene radical which can be substituted by 1 or 2 substituents from the group chlorine, bromine, alkyl of 1 to 4 carbon atoms, alkoxy of 1 to 4 carbon atoms, carboxyl and sulfo, or is a naphthylene radical which can be substituted by 1 or 2 sulfo groups,

$R_1$ denotes a hydrogen atom, a chlorine atom, an alkyl group of 1 to 4 carbon atoms or an alkoxy group of 1 to 4 carbon atoms,

$R_2$ is a hydrogen atom or an alkyl group of 1 to 4 car bon atoms,

G is a carboxyl, methyl or carbalkoxy group of 2 to 5 carbon atoms, Y denotes a vinyl, β-sulfatoethyl, β-phosphatoethyl, β-thiosulfatoethyl or β-chloroethyl group, M has the abovementioned meaning and Z is the α- or β-bromoacryloyl radical or β-chloro propionyl radical or a radical of the general formula (3a)

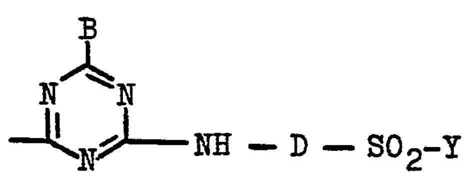
(3a)

with B, D and Y of the abovementioned meanings.

2. The compound as claimed in claim 1, wherein the formula members which appear twice have in each case the same meaning.

3. The compound as claimed in claim 1 or 2, wherein the formula members B each denote a chlorine atom.

4. The compound as claimed in claim 1 or 2 of the general formula (1) in which A is an alkylene group of 2 to 6 carbon atoms or a phenylene radical which can be substituted by 1 or 2 substituents from the group alkoxy of 1 to 4 carbon atoms, alkyl of 1 to 4 carbon atoms, chlorine, sulfo and carboxyl, or A is a radical of the general formula (2a))

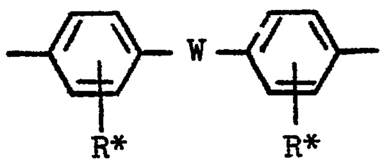

(2a)

in which W is a direct bond or a bridge member of the formula –CH2–, –CH2–CH2–, –CH=CH–, –N=N–, –HN–CO–NH– or –CO–NH– and each R*, identical to or different from the other, denotes a hydrogen atom, a chlorine atom, a methyl, methoxy, ethoxy, carboxyl or sulfo group, B is a chlorine atom and M, K, R and n have the meanings mentioned in claim 1.

5. The compound as claimed in at least one of claims 1 to 4, wherein Y in K denotes the vinyl or ß-sulfatoethyl group.

6. The compound as claimed in at least one of claims 1 to 4, wherein the formula radical D in the formula members K is a phenylene radical which can be substituted by 1 or 2 substituents from the group chlorine, bromine, alkyl of 1 to 4 carbon atoms, alkoxy of 1 to 4 carbon atoms, carboxyl and sulfo.

7. The compound as claimed in at least one of claims 1 to 6, wherein R denotes a hydrogen atom.

8. The compound as claimed in at least one of claims 1 to 7, wherein K is a radical of the general formula (3)

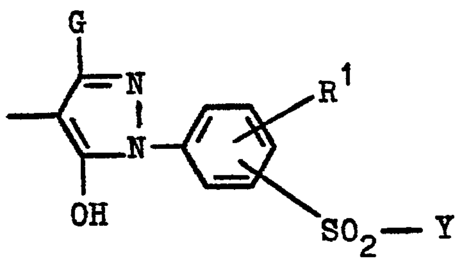

(3)

in which G stands for the methyl or carboxyl group, $R^1$ denotes a hydrogen atom, a chlorine atom, an alkyl group of 1 to 4 carbon atoms or an alkoxy group of 1 to 4 carbon atoms and Y has the meaning mentioned in claim 1 or 5.

9. The compound as claimed in at least one of claims , 1 to 5 and 7, wherein K is a radical of the general formula (4)

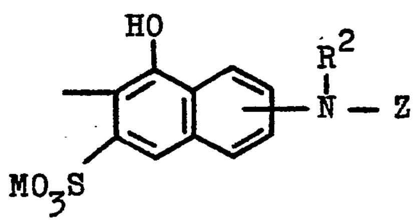

(4)

in which B denotes a hydrogen atom or an alkali metal, $R^2$ is a hydrogen atom or an alkyl group of 1 to 4 carbon atoms and Z is the ß-chloropropionyl group or a group of the general formula (3a)

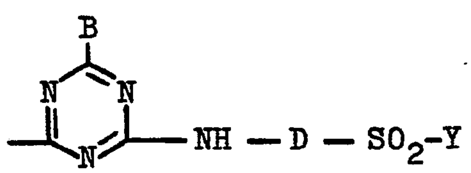

(3a)

in which B denotes a chlorine or fluorine atom, Y has the meaning mentioned in claim 1 or 5 and D is a phenylene radical which is substituted by 1 or 2 substituents from the group chlorine, bromine, alkyl of 1 to 4 carbon atoms, alkoxy of 1 to 4 carbon atoms, carboxyl and sulfo or D preferably denotes an unsubstituted phenylene radical.

10. The compound as claimed in at least one of claims 1 to Sand 7, wherein K is a radical of the general formula (5).

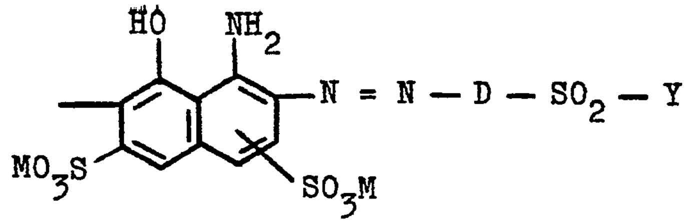

(5)

in which M denotes a hydrogon atom or an alkali metal atom, O is a phenylene radical which is substituted by 1 or 2 substituents from the group chlorine, bromine, alkyl of 1 to 4 carbon atoms, alkoxy of 1 to 4 carbon atoms, carboxyl and sulfo or D preferably denotes an unsubstituted phenylene radical and Y has the meaning mentioned in claim 1 or 5.

11. The compound as claimed in at least one of claims 1 to 5 and 7, wherein D is a phenylene radical which is substituted by 1 or 2 substituents from the group chlorine, bromine, alkyl of 1 to 4 carbon atoms, alkoxy of 1 to 4 carbon atoms, carboxyl and sulfo or O preferably denotes an unsubstituted phenylene radical and Y has the meaning mentioned in claim 1 or 5.

12. The compound as claimed in at least one of claims 1 to 11, wherein W denotes a direct bond or is a group of the formula –CH=CH– or –NH–CO–NH–.

13. A process for preparing the azo compound of the general formula (1) mentioned and defined in claim 1, which comprises a) tetrazotizing an aromatic amino compound of the general formula (7)

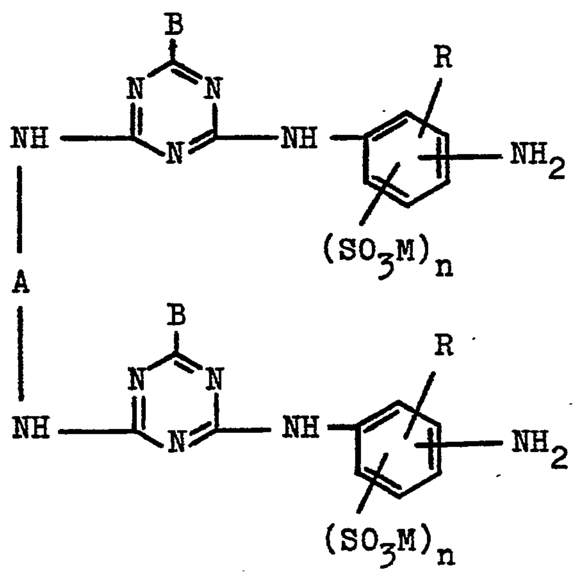

(7)

in which A, B, R, M and n have the meanings mentioned in claim 1 and coupling with a coupling component of the general formula (8)

H–K (8)

in which K has the meaning mentioned in claim 1, or with two different coupling components of general formula (8) in an equivalent amount, or b) reacting a dihalogenotriazinyl-azo compound of the general formula (9)

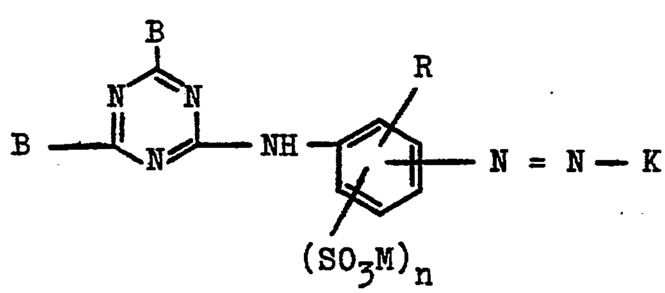

(9)

in which B, K, R, M and n have the mesnings mentioned in claim 1 and the two formula members B are identical to each other, or two different compounds of the general formula (9) in an equivalent amount

with a diamino compound of the general formula (10)
$H_2N-A-HH_2$ (10)

with A of the meaning mentioned in claim 1.

14. Use of a compound of the general formula (1) mentioned and defined in claim 1, as a dye.

15. The use as claimed in claim 14, for dyeing hydroxyl and/or carboxamido-containing material, preferably fiber material.

16. The use as claimed in claim 15, wherein the fiber material is a cellulose fiber/polyester fiber blend or a cellulose fiber/cellulose acetate fiber blend.

17. A process for dyeing (including printing) hydroxyl- and/or carboxamido-containing material, preferably fiber material, by applying a dye to the material from aqueous solution and fixing it by means of heat and/or with the aid of an alkaline agent, which comprises using as the dye a compound of claim 1.

18. A process for dyeing hydroxyl-containing fiber material, preferably cellulose fiber material, which comprises applying a compound of claim 1 to the material in aqueous solution and allowing the said compound to act on the material from the aqueous solution at a pH value between 4 and 8 and at a temperature betweeen 100 and 150°C and fixing said compound on the material.

19. The process as claimed in claim 18, wherein dyeing is carried out at a pH value between 5 and 7.5.

20. The process as claimed in claim 18 or 19, wherein the fiber material used is a cellulose fiber/polyester fiber blend or a cellulose fiber/cellulose triacetate fiber blend.

21. The process as claimed in claim 20, wherein a disperse dye is used in addition.

**Revendications**

1. Composé soluble dans l'eau selon la formule générale (1)

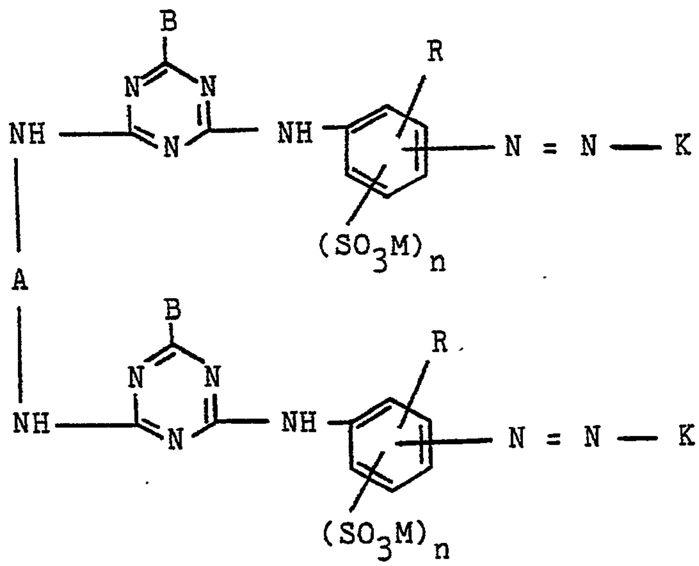

(1)

dans laquelle A est un groupe alkylène ayant de 2 à 6 atomes de carbone ou est un radical phénylène pouvant être substitué par 1 ou 2 substituants de l'ensemble comprenant les groupes alcoxy ayant de 1 à 4 atomes de carbone, alkyle ayant de 1 à 4 atomes de carbone, chloro, sulfo et carboxy, ou encore est un résidu de formule générale (2)

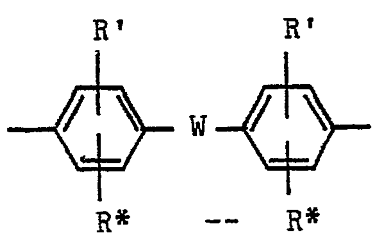

(2)

dans laquelle W est une liaison directe ou un groupe de formule $-CH_2-$, $-CH_2-CH_2-$, $-O-CH_2-CH_2-O-$, $-CH=CH-$, $-N=N-$, $-NH-CO-NH-$ ou $-CO-NH-$, et les radicaux R', et R* représentent chacun un atome d'hydrogène, un atome de chlore, un groupe méthyle, méthoxy, éthoxy, carboxy ou sulfo ;

B est un atome de chlore ou de fluor;

R est un atome d'hydrogène ou de chlore, un groupe alkyle ayant de 1 à 4 atomes de carbone ou un groupe alcoxy ayant de 1 à 4 atomes de carbone;

M est un atome d'hydrogène ou un métal alcalin ;

n vaut 0, 1 ou 2 (si n = 0, ce groupe représente un atome d'hydrogène);

K est un résidu de formules générales (3), (4), (5) ou (6)

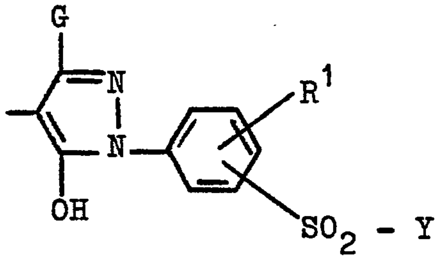

(3)

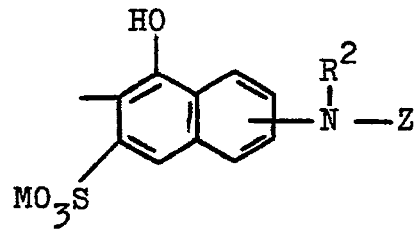

(4)

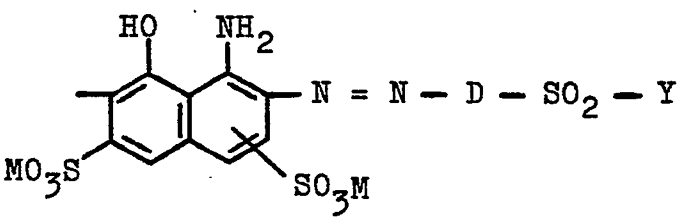

(5)

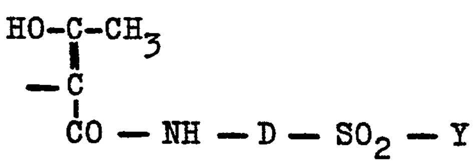

(6)

dans lesquelles D est un radical phénylène pouvant être substitué par 1 ou 2 substituants de l'ensemble comprenant le chlore, le brome, les groupes alkyle ayant de 1 à 4 atomes de carbone, alcoxy ayant de 1 à 4 atomes de carbone, carboxy et sulfo, ou encore est un résidu naphtyiène pouvant être substitué par 1 ou 2 groupes sulfo,

$R^1$ est un atome d'hydrogène, un atome de chlore, un groupe alkyle ayant de 1 à 4 atomes de carbone ou un groupe

alcoxy ayant de 1 à 4 atomes de carbone,

$R^2$ est un atome d'hydrogène ou un groupe alkyle ayant de 1 à 4 atomes de carbone,

G est un groupe carboxy, méthyle ou carbalcoxy ayant de 2 à 5 atomes de carbone,

Y est un groupe vinyle, β-sulfatoéthyle, β-phosphatoéthyle, β-thiosulfatoéthyle ou β-chloroéthyle, M a les significations données ci-dessus et z est le radical α- ou β-bromo-acryloyle ou le radical β-chloropropionyle, ou un résidu de formule générale (3a)

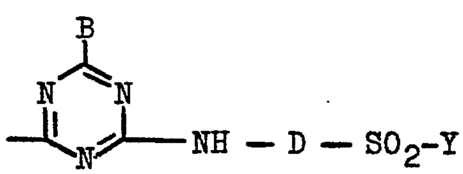

(3a)

B, D et Y ayant les significations ci-dessus.

2. Composé selon la revendication 1, caractérisé en ce gue les éléments de formule apparaissant par paires ont dans chaque paire la même signification.

3. Composé selon les revendications 1 ou 2, caractérisé en ce que les éléments de formule B représentent chacun un atome de chlore.

4. Composé selon la revendication 1 ou 2 de formule générale (1), dans laquelle A est un groupe alkylène ayant de 2 à 6 atomes de carbone ou un groupe phénylène pouvant être substitué par 1 ou 2 substituants de l'ensemble comprenant les groupes alcoxy ayant de 1 à 4 atomes de carbone, alkyle ayant de 1 à 4 atomes de carbone, chloro, sulfo et carboxy, ou bien A est un résidu de formule générale (2a)

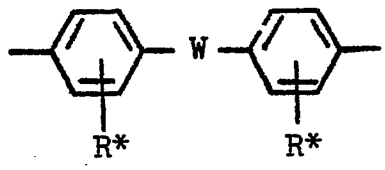

(2a)

dans laquelle W est une liaison directe ou un chaînon pontant de formule $-CH_2-$, $-CH_2-CH_2-$, $-O-CH_2-CH_2-$, $-CH=CH-$, $-N=N-$, $-NH-CO-NH-$ ou $-CO-NH-$, et les radicaux R*, identiques l'un à l'autre ou différents l'un de l'autre, représentent chacun un atome d'hydrogène, un atome de chlore, un groupe méthyle, méthoxy, éthoxy, carboxy ou sulfo, B est un atome de chlore et M, K, R et n ont les significations données dans la revendication 1.

5. Composé selon au moins l'une des revendications 1 à 4, caractérisé en ce que Y, dans K, représente le groupe vinyle ou β-sulfatoéthyle.

6. Composé selon au moins l'une des revendications 1 à 4, caractérisé en ce que le résidu D, dans les éléments de formule K, est un radical phénylène pouvant être substitué par 1 ou 2 substituants de l'ensemble comprenant le chlore, le brome, les groupes alkyle ayant de 1 à 4 atomes de carbone, alcoxy ayant de 1 à 4 atomes de carbone, caboxy et sulfo.

7. Composé selon au moins l'une des revendications 1 à 6, caractérise en ce que R est un atome d'hydrogène.

8. Composé selon au moins l'une des revendications 1 à 7, caractérisé en ce que K est un résidu de formule générale (3)

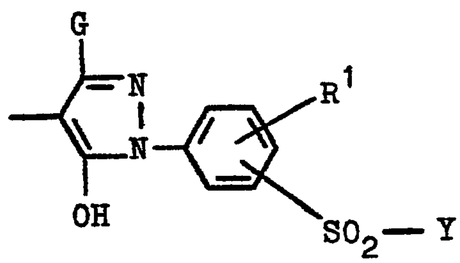

(3)

dans laquelle G est le groupe méthyle ou carboxy, $R^1$ est un atome d'hydrogène, un atome de chlore, un groupe alkyle ayant de 1 à 4 atomes de carbone ou un groupe alcoxy ayant de 1 à 4 atomes de carbone, et Y a les significations données dans la revendication 1 ou 5.

9. Composé selon au moins l'une des revendications 1 à 5 et 7, caractérisé en ce que K est un résidu de formule générale (4)

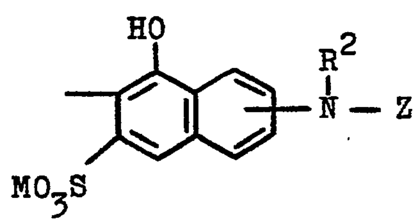

(4)

dans laquelle M est un atome d'hydrogène ou un métal alcalin, $R^2$ est un atome d'hydrogène ou un groupe alkyle ayant de 1 à 4 atomes de carbone, et Z est le groupe β-chloropropionyle ou un groupe de formule générale (3a)

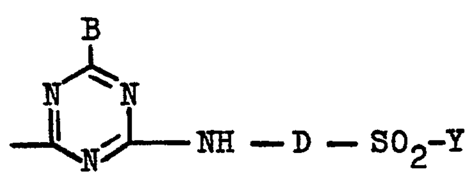

(3a)

dans laquelle B est un atome de chlore ou de fluor, Y a les significations données dans la revendication 1 ou 5 et D est un radical phénylène substitué par 1 ou 2 substituants de l'ensemble comprenant les groupes chloro, bromo, alkyle ayant de 1 à 4 atomes de carbone, alcoxy ayant de 1 à 4 atomes de carbone, carboxy et sulfo, ou bien D est de préférence un radical phénylène non-substitué.

10. Composé selon au moins l'une des revendications 1 à 5 et 7, caractérisé en ce que K est un résidu de formule générale (5)

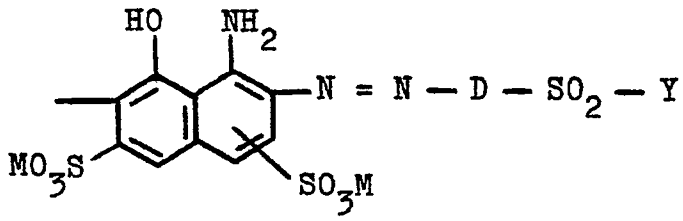

(5)

dans laquelle M est un atome d'hydrogène ou un atome de métal alcalin, D est un radical phénylène substitué par 1 ou 2 substituants de l'ensemble comprenant les groupes chloro, bromo, alkyle ayant de 1 à 4 atomes de carbone, alcoxy ayant de 1 à 4 atomes de carbone, carboxy et sulfo, ou bien D est de préférence un radical phénylène nonsubstitué, et Y a les significations données dans les revendications 1 ou 5.

11. Composé selon au moins l'une des revendications 1 à 5 et 7, caractérisé en ce que D est un radical phénylène substitué par 1 ou 2 substituants de l'ensemble comprenant les groupes chloro, bromo, alkyle ayant de 1 à 4 atomes de carbone, alcoxy ayant de 1 à 4 atomes de carbone, carboxy et sulfo, ou bien D est de préférence un radical phénylène non-substitué, et Y a les significations données dans les revendications 1 ou 5.

12. Composé selon au moins l'une des revendications 1 à 11, caractérisé en ce que W est une liaison directe ou représente un groupe de formule –CH=CH– ou –NW–CO–NH–.

13. Procédé pour la préparation des composés azoïques mentionnés et définis dans la revendication 1, de formule générale (1), caractérisé en ce que

a) on tétrazote un composé amino aromatique de formule générale (7)

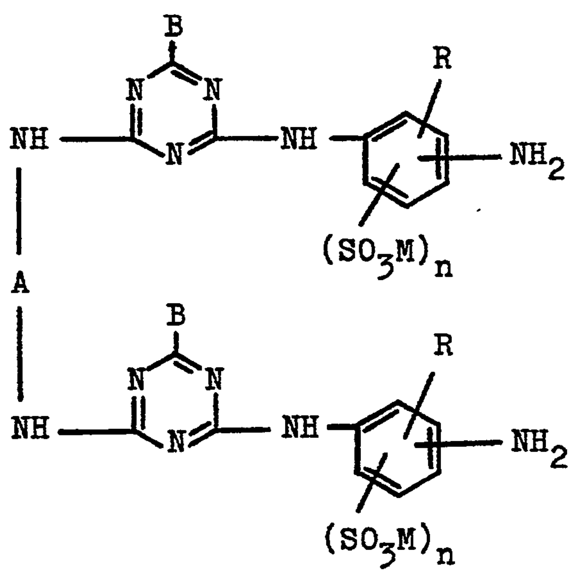

(7)

dans laquelle A, B, R, M et n ont les significations données dans la revendication 1, et on le copule avec un composant de copulation de formule générale (8)

H–K (8)

dans laquelle K a les significations données dans la revendication 1, ou avec deux composants de copulation différents de formule générale (8) en une quantité équivalente, ou bien

b) on fait réagir un composé dihalogénotriazinylazoïque de formule générale (9)

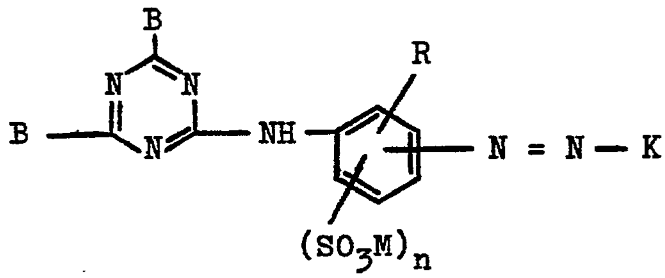

(9)

dans laquelle B, K, R, M et n ont les significations données dans la revendication 1, et les deux éléments de formule B ont la même signification, ou encore deux composés différents de formule générale (9) en une quantité équivalente, avec un composé diamino de formule générale (10)

$H_2N$–A–$NH_2$ (10)

dans laquelle A a les significations données dans la revendication 1.

14. Utilisation d'un composé mentionné et défini dans la revendication 1 de formule générale (1), en tant que colorant.

15. Utilisation selon la revendication 14 pour la teinture d'une matière contenant des groupes hydroxy et/ou carboxamide, de préférence une matière fibreuse.

16. Procédé selon la revendication 15, caractérisé en ce que la matière fibreuse est un mélange de fibres de cellulose et de fibres de polyester ou un mélange de fibres de cellulose et de fibres d'acétate de cellulose.

17. Procédé pour la teinture (y compris l'impression) d'une matière contenant des groupes hydroxy et/ou carboxamide, de préférence une matière fibreuse, dans lequel on applique un colorant sur la matière à partir d'une solution aqueuse et on le fixe par la chaleur et/ou à l'aide d'un agent à effet alcalin, caractérisé en ce qu'on utilise comme colorant un composé selon la revendication 1.

18. Procédé pour la teinture d'une matière fibreuse contenant des groupes hydroxy, de préférence une matière à base de fibres cellulosiques, caractérisé en ce qu'on applique un composé selon la revendication 1 sur la matière en solution aqueuse, et qu'on le laisse agir sur la matière à partir de la solution aqueuse à un pH de 4 à 8 et à une température de 100 à 150°C, et qu'on le fixe sur la matière.

19. Procédé selon la revendication 18, caractérisé en ce que la teinture a lieu à pH compris entre 5 et 7,5.

20. Procédé selon la revendication 18 ou 19, caractérisé en ce qu'on utilise comme matière fibreuse un mélange de fibres de cellulose et de fibres de polyester ou un mélange de fibres de cellulose et de fibres de triacétate de cellulose.

21. Procédé selon la revendication 20, caractérisé en ce qu'on utilise en outre un dispersant.